# EUROPEAN PATENT APPLICATION

(11) **EP 4 657 920 A1**
(43) Date of publication of application: **03.12.2025**
(21) Application number: 24752788.0
(22) Date of filing: 01.02.2024
(51) Int. Cl.: H04W 28/04

(54) **COMMUNICATION METHOD, APPARATUS AND SYSTEM**

(30) Priority: 09.02.2023 CN 202310143514
(71) Applicant: Huawei Technologies Co., Ltd., Shenzhen, Guangdong 518129 (CN)
(72) Inventor: YANG, Ruonan, Shenzhen, Guangdong 518129 (CN); CHEN, Ying, Shenzhen, Guangdong 518129 (CN); WANG, Jun, Shenzhen, Guangdong 518129 (CN)
(74) Representative: Goddar, Heinz J.
(86) International application number: PCT/CN2024/075297
(87) International publication number: WO 2024/164932

(57) **Abstract**

This application provides a communication method, apparatus, and system, and is applied to the field of communication technologies. The communication method provided in this application includes: obtaining a first initial HARQ feedback configuration corresponding to a first HARQ process and a second initial HARQ feedback configuration corresponding to a second HARQ process; receiving first control information, where the first control information includes first indication information corresponding to a first transport block and a second transport block, and the first indication information indicates whether to toggle the first initial HARQ feedback configuration and/or the second initial HARQ feedback configuration; and determining, based on the first indication information, that both the first HARQ process and the second HARQ process need HARQ feedbacks, or determining that neither the first HARQ process nor the second HARQ process needs a HARQ feedback. According to the communication method provided in this application, a receiving end may determine, based on the first indication information, whether to toggle the first initial HARQ feedback configuration and/or the second initial HARQ feedback configuration, to achieve consistency between HARQ feedback configurations of the two HARQ processes, and avoid mutual impact between HARQ processes with different HARQ feedback configurations.

## Description

This application claims priority to Chinese Patent Application No. 202310143514.1, filed with the China National Intellectual Property Administration on February 9, 2023 and entitled "COMMUNICATION METHOD, APPARATUS, AND SYSTEM", which is incorporated herein by reference in its entirety.

### TECHNICAL FIELD

This application relates to the wireless communication field, and in particular, to a communication method, apparatus, and system.

### BACKGROUND

In a wireless communication system, a hybrid automatic repeat request (hybrid automatic repeat request, HARQ) mechanism is a method for improving reliability of data transmission. Specifically, a transmitting end may transmit data through a HARQ process (HARQ process), and may determine, based on a feedback result of a receiving end, whether data needs to be retransmitted. Different HARQ processes may be distinguished based on process numbers of the HARQ processes.

Both a non-terrestrial network (non-terrestrial network, NTN) system and the internet of things (Internet of Things) support a HARQ feedback mechanism. However, in the narrowband internet of things (narrowband internet of things, NB-IoT), because a capability of a terminal device is limited, a maximum quantity of HARQ processes in downlink transmission is set to 2. In addition, the NB-IoT further supports scheduling of a plurality of transport blocks (transport block, TB) based on one piece of downlink control information (downlink control information, DCI).

Currently, in a system in which the IoT and the NTN are combined (which may be referred to as an IoT NTN system for short), for a scenario in which a single TB is scheduled based on DCI, a network device may indicate, by using DCI, whether a HARQ process corresponding to a TB scheduled based on the DCI needs a feedback. For example, the DCI may indicate, depending on whether an initial HARQ process configured through radio resource control (radio resource control, RRC) is toggled, whether a feedback is needed in current scheduling.

However, in the IoT NTN system, for a scenario in which a plurality of TBs are scheduled based on DCI, there is currently no related solution about how to indicate whether a feedback is needed in current scheduling.

### SUMMARY

Embodiments of this application provide a communication method, apparatus, and system, to indicate, in a multi-TB scheduling scenario, whether a HARQ process needs a feedback.

To achieve the foregoing objective, the following technical solutions are used in embodiments of this application.

According to a first aspect, a communication method is provided. The method may be performed by a second communication apparatus. The second communication apparatus may be a terminal device or a component (for example, a processor, a chip, or a chip system) of a terminal device. An example in which the second communication apparatus performs the method is used below for description. The method includes: The second communication apparatus obtains a first initial HARQ feedback configuration corresponding to a first HARQ process and a second initial HARQ feedback configuration corresponding to a second HARQ process, where the first initial HARQ feedback configuration includes that a HARQ feedback is needed or no HARQ feedback is needed, and the second initial HARQ feedback configuration includes that a HARQ feedback is needed or no HARQ feedback is needed. The second communication apparatus receives first control information, where the first control information includes first indication information corresponding to a first transport block and a second transport block, the first transport block corresponds to the first HARQ process, the second transport block corresponds to the second HARQ process, and the first indication information indicates whether to toggle the first initial HARQ feedback configuration and/or the second initial HARQ feedback configuration. Further, the second communication apparatus determines, based on the first indication information, that both the first HARQ process and the second HARQ process need HARQ feedbacks, or determines that neither the first HARQ process nor the second HARQ process needs a HARQ feedback.

According to the communication method provided in this embodiment of this application, the second communication apparatus may determine, based on the first indication information, whether to toggle the first initial HARQ feedback configuration and/or the second initial HARQ feedback configuration, to achieve consistency between HARQ feedback configurations of the two HARQ processes, to be specific, neither of the HARQ processes needs a feedback or both of the HARQ processes need feedbacks, to avoid mutual impact between HARQ processes with different HARQ feedback configurations. If neither of the HARQ processes needs a feedback, a system throughput may be increased. If both of the HARQ processes need feedbacks, a transmitting end (an apparatus that sends the first transport block and the second transport block) may be assisted in adaptive link adjustment.

With reference to the first aspect, in a possible design, that the second communication apparatus determines, based on the first indication information, that both the first HARQ process and the second HARQ process need HARQ feedbacks, or determines that neither the first HARQ process nor the second HARQ process needs a HARQ feedback includes: The second communication apparatus determines a toggling result of the first initial HARQ feedback configuration and/or a toggling result of the second initial HARQ feedback configuration based on the first indication information. The second communication apparatus determines, based on the toggling result of the first initial HARQ feedback configuration and/or the toggling result of the second initial HARQ feedback configuration, whether HARQ feedback needs to be performed for the first HARQ process and the second HARQ process. When at least one of the first HARQ process and the second HARQ process is a HARQ process that needs a HARQ feedback, the second communication apparatus determines that both the first HARQ process and the second HARQ process need HARQ feedbacks. Alternatively, when at least one of the first HARQ process and the second HARQ process is a HARQ process that needs no HARQ feedback, the second communication apparatus determines that neither the first HARQ process nor the second HARQ process needs a HARQ feedback.

According to this solution, when the toggling result indicates that one HARQ process needs a feedback and the other HARQ process needs no feedback, the second communication apparatus may still determine that both the first HARQ process and the second HARQ process need HARQ feedbacks, or determine that neither the first HARQ process nor the second HARQ process needs a HARQ feedback.

With reference to the first aspect, in a possible design, that the second communication apparatus obtains the first initial HARQ feedback configuration corresponding to the first HARQ process and the second initial HARQ feedback configuration corresponding to the second HARQ process includes: The second communication apparatus receives RRC configuration information, where the RRC configuration information includes the first initial HARQ feedback configuration and the second initial HARQ feedback configuration.

According to a second aspect, a communication method is provided. The method may be performed by a first communication apparatus. The first communication apparatus may be a network device or a component (for example, a processor, a chip, or a chip system) of a network device. An example in which the first communication apparatus performs the method is used below for description. The method includes: The first communication apparatus sends a first initial HARQ feedback configuration corresponding to a first HARQ process and a second initial HARQ feedback configuration corresponding to a second HARQ process. The first communication apparatus sends first control information, where the first control information includes first indication information corresponding to a first transport block and a second transport block, the first transport block corresponds to the first HARQ process, the second transport block corresponds to the second HARQ process, and the first indication information indicates whether to toggle the first initial HARQ feedback configuration and/or the second initial HARQ feedback configuration.

According to the communication method provided in this embodiment of this application, the first communication apparatus may indicate, by using the first indication information, whether to toggle the first initial HARQ feedback configuration and/or the second initial HARQ feedback configuration, so that a receiving end can determine, based on the first indication information, whether the first HARQ process and the second HARQ process need feedbacks. In this way, in a multi-TB scheduling scenario, whether each of a plurality of TBs needs a feedback is indicated.

With reference to the second aspect, in a possible design, that the first communication apparatus sends the first initial HARQ feedback configuration corresponding to the first HARQ process and the second initial HARQ feedback configuration corresponding to the second HARQ process includes: sending RRC configuration information, where the RRC configuration information includes the first initial HARQ feedback configuration and the second initial HARQ feedback configuration.

With reference to the first aspect or the second aspect, in a possible design, that the first indication information indicates whether to toggle the first initial HARQ feedback configuration and/or the second initial HARQ feedback configuration includes: The first indication information indicates to toggle an initial HARQ feedback configuration in the first initial HARQ feedback configuration and the second initial HARQ feedback configuration from indicating that no feedback is needed to indicating that a feedback is needed; or the first indication information indicates to toggle an initial HARQ feedback configuration in the first initial HARQ feedback configuration and the second initial HARQ feedback configuration from indicating that a feedback is needed to indicating that no feedback is needed.

In this solution, it can be ensured that the first HARQ process and the second HARQ process are in a same state after the second communication apparatus performs toggling based on the first indication information. Therefore, the second communication apparatus may determine, based on the first indication information, that both the first HARQ process and the second HARQ process need feedbacks or neither the first HARQ process nor the second HARQ process needs a feedback.

With reference to the first aspect or the second aspect, in a possible design, when the first indication information indicates to toggle an initial HARQ feedback configuration in the first initial HARQ feedback configuration and the second initial HARQ feedback configuration from indicating that no feedback is needed to indicating that a feedback is needed, the first indication information further indicates a HARQ feedback resource, where the HARQ feedback resource is used to send a HARQ feedback corresponding to the first transport block and a HARQ feedback corresponding to the second transport block.

In this solution, the first indication information may further indicate the HARQ feedback resource, so that signaling overheads are reduced.

With reference to the first aspect or the second aspect, in a possible design, that the first indication information indicates whether to toggle the first initial HARQ feedback configuration and/or the second initial HARQ feedback configuration includes: When the first initial HARQ feedback configuration is the same as the second initial HARQ feedback configuration, the first indication information indicates to toggle the first initial HARQ feedback configuration and the second initial HARQ feedback configuration, or the first indication information indicates not to toggle the first initial HARQ feedback configuration or the second initial HARQ feedback configuration.

In this solution, it can be ensured that a HARQ feedback configuration corresponding to the first HARQ process and a HARQ feedback configuration corresponding to the second HARQ process are the same. Therefore, the second communication apparatus may determine, based on the first indication information, that both the first HARQ process and the second HARQ process need feedbacks or neither the first HARQ process nor the second HARQ process needs a feedback.

With reference to the first aspect or the second aspect, in a possible design, that the first indication information indicates whether to toggle the first initial HARQ feedback configuration and/or the second initial HARQ feedback configuration includes: When the first initial HARQ feedback configuration is different from the second initial HARQ feedback configuration, the first indication information indicates to toggle the first initial HARQ feedback configuration, or the first indication information indicates to toggle the second initial HARQ feedback configuration.

In this solution, it can be ensured that the first HARQ process and the second HARQ process are in a same state after the second communication apparatus performs toggling based on the first indication information. Therefore, the second communication apparatus may determine, based on the first indication information, that both the first HARQ process and the second HARQ process need feedbacks or neither the first HARQ process nor the second HARQ process needs a feedback.

With reference to the first aspect or the second aspect, in a possible design, that the first indication information indicates whether to toggle the first initial HARQ feedback configuration and/or the second initial HARQ feedback configuration includes: When the first initial HARQ feedback configuration is different from the second initial HARQ feedback configuration, the first indication information indicates to toggle an initial HARQ feedback configuration in the first initial HARQ feedback configuration and the second initial HARQ feedback configuration from indicating that no feedback is needed to indicating that a feedback is needed; or the first indication information indicates to toggle an initial HARQ feedback configuration in the first initial HARQ feedback configuration and the second initial HARQ feedback configuration from indicating that a feedback is needed to indicating that no feedback is needed.

In this solution, it can be ensured that the first HARQ process and the second HARQ process are in a same state after the second communication apparatus performs toggling based on the first indication information. Therefore, the second communication apparatus may determine, based on the first indication information, that both the first HARQ process and the second HARQ process need feedbacks or neither the first HARQ process nor the second HARQ process needs a feedback.

With reference to the first aspect or the second aspect, in a possible design, that the first indication information indicates whether to toggle the first initial HARQ feedback configuration and/or the second initial HARQ feedback configuration includes: When the first initial HARQ feedback configuration is different from the second initial HARQ feedback configuration, the first indication information indicates not to toggle the first initial HARQ feedback configuration or the second initial HARQ feedback configuration; or the first indication information indicates to toggle an initial HARQ feedback configuration in the first initial HARQ feedback configuration and the second initial HARQ feedback configuration from indicating that no feedback is needed to indicating that a feedback is needed; or the first indication information indicates to toggle an initial HARQ feedback configuration in the first initial HARQ feedback configuration and the second initial HARQ feedback configuration from indicating that a feedback is needed to indicating that no feedback is needed.

With reference to the first aspect or the second aspect, in a possible design, that the first indication information indicates whether to toggle the first initial HARQ feedback configuration and/or the second initial HARQ feedback configuration includes: The first indication information indicates to toggle a target initial HARQ feedback configuration, or the first indication information indicates not to toggle a target initial HARQ feedback configuration, where when a subframe number of a subframe used to receive the first control information is an odd number, the target initial HARQ feedback configuration is the first initial HARQ feedback configuration; or when a subframe number of a subframe used to receive the first control information is an even number, the target initial HARQ feedback configuration is the second initial HARQ feedback configuration.

In this solution, a HARQ feedback configuration that needs to be toggled may be associated with a subframe number, and no additional signaling needs to be configured to indicate a HARQ process that is to be toggled, so that signaling overheads are reduced.

With reference to the first aspect or the second aspect, in a possible design, that the first indication information indicates whether to toggle the first initial HARQ feedback configuration and/or the second initial HARQ feedback configuration includes: The first indication information indicates not to toggle the first initial HARQ feedback configuration or the second initial HARQ feedback configuration; or the first indication information indicates to toggle an initial HARQ feedback configuration in the first initial HARQ feedback configuration and the second initial HARQ feedback configuration from indicating that no feedback is needed to indicating that a feedback is needed; or the first indication information indicates to toggle an initial HARQ feedback configuration in the first initial HARQ feedback configuration and the second initial HARQ feedback configuration from indicating that a feedback is needed to indicating that no feedback is needed.

With reference to the first aspect or the second aspect, in a possible design, the first indication information occupies 1 bit in the first control information.

According to a third aspect, a communication apparatus is provided, and is configured to implement the method according to the first aspect. The communication apparatus may be the second communication apparatus in the first aspect, or an apparatus including the second communication apparatus, or an apparatus included in the second communication apparatus, for example, a chip.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the third aspect, in a possible design, the communication apparatus includes a transceiver module and a processing module. The processing module is configured to obtain a first initial HARQ feedback configuration corresponding to a first HARQ process and a second initial HARQ feedback configuration corresponding to a second HARQ process, where the first initial HARQ feedback configuration includes that a HARQ feedback is needed or no HARQ feedback is needed, and the second initial HARQ feedback configuration includes that a HARQ feedback is needed or no HARQ feedback is needed. The transceiver module is configured to receive first control information, where the first control information includes first indication information corresponding to a first transport block and a second transport block, the first transport block corresponds to the first HARQ process, the second transport block corresponds to the second HARQ process, and the first indication information indicates whether to toggle the first initial HARQ feedback configuration and/or the second initial HARQ feedback configuration. The processing module is further configured to determine, based on the first indication information, that both the first HARQ process and the second HARQ process need HARQ feedbacks, or determine that neither the first HARQ process nor the second HARQ process needs a HARQ feedback.

With reference to the third aspect, in a possible design, that the processing module is further configured to determine, based on the first indication information, that both the first HARQ process and the second HARQ process need HARQ feedbacks, or determine that neither the first HARQ process nor the second HARQ process needs a HARQ feedback includes: The processing module is further configured to: determine a toggling result of the first initial HARQ feedback configuration and/or a toggling result of the second initial HARQ feedback configuration based on the first indication information; determine, based on the toggling result of the first initial HARQ feedback configuration and/or the toggling result of the second initial HARQ feedback configuration, whether HARQ feedback needs to be performed for the first HARQ process and the second HARQ process; and when at least one of the first HARQ process and the second HARQ process is a HARQ process that needs a HARQ feedback, determine that both the first HARQ process and the second HARQ process need HARQ feedbacks; or when at least one of the first HARQ process and the second HARQ process is a HARQ process that needs no HARQ feedback, determine that neither the first HARQ process nor the second HARQ process needs a HARQ feedback.

With reference to the third aspect, in a possible design, that the processing module is configured to obtain the first initial HARQ feedback configuration corresponding to the first HARQ process and the second initial HARQ feedback configuration corresponding to the second HARQ process includes: The processing module receives radio resource control RRC configuration information through the transceiver module, where the RRC configuration information includes the first initial HARQ feedback configuration and the second initial HARQ feedback configuration.

According to a fourth aspect, a communication apparatus is provided, and is configured to implement the method according to the second aspect. The communication apparatus may be the first communication apparatus in the second aspect, or an apparatus including the first communication apparatus, or an apparatus included in the first communication apparatus, for example, a chip.

The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the fourth aspect, in a possible design, the apparatus includes a transceiver module. The transceiver module is configured to send a first initial HARQ feedback configuration corresponding to a first HARQ process and a second initial HARQ feedback configuration corresponding to a second HARQ process. The transceiver module is further configured to send first control information, where the first control information includes first indication information corresponding to a first transport block and a second transport block, the first transport block corresponds to the first HARQ process, the second transport block corresponds to the second HARQ process, and the first indication information indicates whether to toggle the first initial HARQ feedback configuration and/or the second initial HARQ feedback configuration.

With reference to the fourth aspect, in a possible design, that the transceiver module is configured to send the first initial HARQ feedback configuration corresponding to the first HARQ process and the second initial HARQ feedback configuration corresponding to the second HARQ process includes: The transceiver module is configured to send RRC configuration information, where the RRC configuration information includes the first initial HARQ feedback configuration and the second initial HARQ feedback configuration.

With reference to the third aspect or the fourth aspect, in a possible design, that the first indication information indicates whether to toggle the first initial HARQ feedback configuration and/or the second initial HARQ feedback configuration includes: The first indication information indicates to toggle an initial HARQ feedback configuration in the first initial HARQ feedback configuration and the second initial HARQ feedback configuration from indicating that no feedback is needed to indicating that a feedback is needed; or the first indication information indicates to toggle an initial HARQ feedback configuration in the first initial HARQ feedback configuration and the second initial HARQ feedback configuration from indicating that a feedback is needed to indicating that no feedback is needed.

With reference to the third aspect or the fourth aspect, in a possible design, that the first indication information indicates whether to toggle the first initial HARQ feedback configuration and/or the second initial HARQ feedback configuration includes: When the first initial HARQ feedback configuration is the same as the second initial HARQ feedback configuration, the first indication information indicates to toggle the first initial HARQ feedback configuration and the second initial HARQ feedback configuration, or the first indication information indicates not to toggle the first initial HARQ feedback configuration or the second initial HARQ feedback configuration.

With reference to the third aspect or the fourth aspect, in a possible design, that the first indication information indicates whether to toggle the first initial HARQ feedback configuration and/or the second initial HARQ feedback configuration includes: When the first initial HARQ feedback configuration is different from the second initial HARQ feedback configuration, the first indication information indicates to toggle the first initial HARQ feedback configuration, or the first indication information indicates to toggle the second initial HARQ feedback configuration.

With reference to the third aspect or the fourth aspect, in a possible design, that the first indication information indicates whether to toggle the first initial HARQ feedback configuration and/or the second initial HARQ feedback configuration includes: When the first initial HARQ feedback configuration is different from the second initial HARQ feedback configuration, the first indication information indicates to toggle an initial HARQ feedback configuration in the first initial HARQ feedback configuration and the second initial HARQ feedback configuration from indicating that no feedback is needed to indicating that a feedback is needed; or the first indication information indicates to toggle an initial HARQ feedback configuration in the first initial HARQ feedback configuration and the second initial HARQ feedback configuration from indicating that a feedback is needed to indicating that no feedback is needed.

With reference to the third aspect or the fourth aspect, in a possible design, that the first indication information indicates whether to toggle the first initial HARQ feedback configuration and/or the second initial HARQ feedback configuration includes: When the first initial HARQ feedback configuration is different from the second initial HARQ feedback configuration, the first indication information indicates not to toggle the first initial HARQ feedback configuration or the second initial HARQ feedback configuration; or the first indication information indicates to toggle an initial HARQ feedback configuration in the first initial HARQ feedback configuration and the second initial HARQ feedback configuration from indicating that no feedback is needed to indicating that a feedback is needed; or the first indication information indicates to toggle an initial HARQ feedback configuration in the first initial HARQ feedback configuration and the second initial HARQ feedback configuration from indicating that a feedback is needed to indicating that no feedback is needed.

With reference to the third aspect or the fourth aspect, in a possible design, that the first indication information indicates whether to toggle the first initial HARQ feedback configuration and/or the second initial HARQ feedback configuration includes: The first indication information indicates to toggle a target initial HARQ feedback configuration, or the first indication information indicates not to toggle a target initial HARQ feedback configuration, where when a subframe number of a subframe used to receive the first control information is an odd number, the target initial HARQ feedback configuration is the first initial HARQ feedback configuration; or when a subframe number of a subframe used to receive the first control information is an even number, the target initial HARQ feedback configuration is the second initial HARQ feedback configuration.

With reference to the third aspect or the fourth aspect, in a possible design, that the first indication information indicates whether to toggle the first initial HARQ feedback configuration and/or the second initial HARQ feedback configuration includes: The first indication information indicates not to toggle the first initial HARQ feedback configuration or the second initial HARQ feedback configuration; or the first indication information indicates to toggle an initial HARQ feedback configuration in the first initial HARQ feedback configuration and the second initial HARQ feedback configuration from indicating that no feedback is needed to indicating that a feedback is needed; or the first indication information indicates to toggle an initial HARQ feedback configuration in the first initial HARQ feedback configuration and the second initial HARQ feedback configuration from indicating that a feedback is needed to indicating that no feedback is needed.

With reference to the third aspect or the fourth aspect, in a possible design, the first indication information occupies 1 bit in the first control information.

According to a fifth aspect, a communication apparatus is provided, and includes a processor. The processor is configured to execute instructions stored in a memory. When the processor executes the instructions, the communication apparatus is enabled to perform the method according to any one of the foregoing aspects. The communication apparatus may be the second communication apparatus in the first aspect, or the communication apparatus may be the first communication apparatus in the second aspect.

In a possible design, the communication apparatus further includes the memory, and the memory is configured to store computer instructions. Optionally, the processor and the memory are integrated together, or the processor and the memory are separately disposed.

In a possible design, the memory is coupled to the processor, and is located outside the communication apparatus.

According to a sixth aspect, a communication apparatus is provided, and includes a processor and an interface circuit. The interface circuit is configured to communicate with a module other than the communication apparatus. The processor is configured to perform the method according to any one of the foregoing aspects through a logic circuit or by running a computer program or computer instructions. The communication apparatus may be the second communication apparatus in the first aspect, or the communication apparatus may be the first communication apparatus in the second aspect.

Alternatively, the interface circuit may be a code/data read/write interface circuit, and the interface circuit is configured to receive computer-executable instructions (the computer-executable instructions are stored in a memory, and may be read from the memory directly or through another component) and transmit the computer-executable instructions to the processor, so that the processor runs the computer-executable instructions to perform the method according to any one of the foregoing aspects.

In some possible designs, the communication apparatus may be a chip or a chip system.

According to a seventh aspect, this application provides a computer-readable storage medium. The computer-readable storage medium stores instructions. When the instructions are run, the communication method performed by the second communication apparatus in the first aspect or the possible designs of the first aspect is performed; or when the instructions are run, the communication method performed by the first communication apparatus in the second aspect or the possible designs of the second aspect is performed.

According to an eighth aspect, this application provides a computer program product including instructions. When the computer program product is run on a computer, the computer is enabled to perform the communication method performed by the second communication apparatus in the first aspect or the possible designs of the first aspect, or the computer is enabled to perform the communication method performed by the first communication apparatus in the second aspect or the possible designs of the second aspect.

According to a ninth aspect, a communication apparatus is provided (for example, the communication apparatus may be a chip or a chip system). The communication apparatus includes a processor, configured to implement the functions in any one of the foregoing aspects. In a possible design, the communication apparatus further includes a memory, and the memory is configured to store necessary program instructions and data. When the communication apparatus is a chip system, the communication apparatus may include a chip, or may include a chip and another discrete component.

According to a tenth aspect, a communication system is provided. The communication system includes a first communication apparatus and a second communication apparatus. The second communication apparatus is configured to implement the method according to the first aspect, and the second communication apparatus is configured to implement the method according to the second aspect.

For technical effects of any design manner in the third aspect to the tenth aspect, refer to technical effects of different design manners in the first aspect and the second aspect. Details are not described herein again.

### BRIEF DESCRIPTION OF DRAWINGS

FIG. 1 is a diagram of a structure of a communication system according to an embodiment of this application;
FIG. 2 is a diagram of a structure of an NTN system according to an embodiment of this application;
FIG. 3 is a diagram of structures of a terminal device and a network device according to an embodiment of this application;
FIG. 4 is a diagram of a structure of another terminal device according to an embodiment of this application;
FIG. 5 is a diagram of interaction in a communication method according to an embodiment of this application; and
FIG. 6 is a diagram of a structure of a communication apparatus according to an embodiment of this application.

### DESCRIPTION OF EMBODIMENTS

For ease of understanding technical solutions in embodiments of this application, related technologies in this application are first briefly described below.

### 1. NTN system:

The NTN system is an important part of a 5th generation mobile communication technology (5th generation mobile communication technology, 5G) system and a future network. In the NTN system, a satellite may serve as an access network device (for example, a base station) to provide a network service for an area (for example, an ocean or a forest) that cannot be fully covered by a terrestrial mobile communication system. The NTN system includes the satellite, a high-altitude platform, an uncrewed aerial vehicle, and other nodes.

### 2. IoT system:

The IoT system enables physically independent objects to implement a network connection function for information exchange and communication, to implement object recognition, monitoring, positioning, control, and other functions. The IoT may be widely used in smart meter reading, precision farming, industrial automation, a smart building, a POS machine, environment monitoring, telemedicine, and other scenarios.

### 3. HARQ:

In the HARQ mechanism, a transmitting end (or referred to as a transmit-end device or a sending device) may send data to a receiving end (or referred to as a receive-end device or a receiving device) through a HARQ process. Different HARQ processes may be distinguished by using process numbers of the HARQ processes. The HARQ process may be configured to need a feedback or need no feedback. Details are described below.

If the HARQ process is configured to need a feedback, after receiving data, the receiving end needs to send feedback information to the transmitting end based on a data decoding result, and the transmitting end needs to determine, based on the feedback information from the receiving end, whether the data needs to be retransmitted. If the receiving end successfully decodes the data, the receiving end needs to send a positive feedback (acknowledgement, ACK) to the transmitting end. After receiving the ACK, the transmitting end determines that the data does not need to be retransmitted. If the receiving end fails to decode the data, the receiving end needs to send a negative feedback (negative acknowledgement, NACK) to the transmitting end. After receiving the NACK, the transmitting end sends retransmitted data to the receiving end.

In addition, based on a stop-and-wait protocol (stop-and-wait protocol), if a HARQ process is configured to need a feedback, after sending data through the HARQ process, the transmitting end needs to suspend sending data through the HARQ process before receiving feedback information for the HARQ process. To be specific, before the transmitting end receives the feedback information for the HARQ process, the HARQ process is occupied and cannot be used to send data. However, when waiting for the feedback information for the HARQ process, the transmitting end may send data through another unoccupied HARQ process.

For example, after the transmitting end sends a data packet 1 through a HARQ process with a process number of 1, before receiving feedback information sent by the receiving end for the data packet 1, the transmitting end cannot send a data packet through the HARQ process with a process number of 1. If the transmitting end needs to send a data packet 2 when waiting for the feedback information for the data packet 1, the transmitting end may send the data packet 2 through another unoccupied HARQ process, for example, a HARQ process with a process number of 2.

If the HARQ process is configured to need no feedback, the receiving end does not need to send feedback information to the transmitting end after receiving data. After sending data through a HARQ process, the transmitting end may continue to send data through the HARQ process without waiting for feedback information from the receiving end.

### 4. Multi-TB scheduling:

To increase a throughput, the IoT system supports scheduling of a plurality of TBs by using one piece of DCI. In the IoT system, a maximum quantity of HARQ processes in each of uplink transmission and downlink transmission is 2. Therefore, the current IoT system supports scheduling of two TBs by using one piece of DCI. The following describes in detail a manner of scheduling a plurality of TBs by using one piece of DCI in the IoT system.

Compared with a case in which DCI is used to schedule a single TB, when DCI is used for multi-TB scheduling, meanings of most fields in the DCI remain unchanged. However, a field originally indicating a process number of a HARQ process corresponding to the single TB is now represented as a new data indicator (new data indicator, NDI) field for the 2^{nd} TB, and indicates whether the 2^{nd} TB is newly transmitted or retransmitted, and an original NDI field for the single TB now indicates whether the 1^{st} TB is newly transmitted or retransmitted. In addition, by default, a process number of a HARQ process corresponding to the 1^{st} TB is 0, and a process number of a HARQ process corresponding to the 2^{nd} TB is 1.

### 5. HARQ feedback in an IoT NTN system:

The IoT NTN system is a system in which the NTN and the IoT are combined. The IoT NTN system supports the HARQ mechanism. In addition, based on the IoT system, maximum quantities of HARQ processes in both uplink transmission and downlink transmission in the IoT NTN system are 2, and a plurality of TBs can be scheduled based on one piece of DCI.

Currently, in the downlink transmission in the IoT NTN system, a HARQ feedback process corresponding to a manner of scheduling a single TB by using one piece of DCI is as follows:
(1) When a HARQ process feedback configuration is configured through RRC, for example, a corresponding bitmap (bitmap) is set to 01, indicating that the 1^{st} HARQ process (to be specific, a HARQ process with a process number of 0) needs no feedback and the 2^{nd} HARQ process (to be specific, a HARQ process with a process number of 1) needs a feedback, and when DCI is not configured, through RRC, to be used for configuring a HARQ process feedback configuration, a terminal device determines, based on the HARQ process feedback configuration configured through RRC, whether a HARQ process corresponding to data needs a feedback.
(2) When a HARQ process feedback configuration is configured through RRC and DCI is configured, through RRC, to be used for configuring a HARQ process feedback configuration, an indication in the DCI may be toggled for an initial RRC configuration, and a terminal device determines, based on a toggled HARQ feedback configuration, whether a HARQ process corresponding to data needs a feedback.
   For example, it is assumed that, in the initial RRC configuration, the 1^{st} HARQ process needs no feedback and the 2^{nd} HARQ process needs a feedback, DCI is used to schedule a TB1, and a value of a corresponding bit (bit) field in the DCI is 1, indicating that a HARQ feedback configuration of a HARQ process corresponding to the TB1 is to be toggled. If a TB scheduled based on the DCI corresponds to the 1^{st} HARQ process, the terminal device determines, based on an indication in the DCI, that the TB1 needs a feedback.
(3) When no HARQ process feedback configuration is configured through RRC and DCI is configured, through RRC, to be used for configuring a HARQ process feedback configuration, an indication in the DCI directly indicates whether a HARQ process scheduled based on the DCI needs a feedback.
(4) A HARQ process feedback configuration being configured through neither RRC nor DCI indicates that both HARQ processes need feedbacks.

However, in the downlink transmission in the IoT NTN system, for a scenario in which a plurality of TBs are scheduled based on DCI, there is currently no solution about how to design HARQ feedback configurations of HARQ processes respectively corresponding to the plurality of TBs. To design a configuration solution, the following provides brief analysis for the scenario.

Based on the stop-and-wait protocol, in a scenario in which a plurality of TBs are scheduled based on one piece of DCI, if HARQ feedback configurations of HARQ processes respectively corresponding to all TBs are different, a HARQ process that needs no feedback is suspended from data transmission due to impact of a HARQ process that needs a feedback. For example, it is assumed that, in two TBs scheduled based on DCI, a TB1 corresponds to a HARQ process with a process number of 0, and a TB2 corresponds to a HARQ process with a process number of 1, where the HARQ process with a process number of 0 is configured to need no feedback, and the HARQ process with a process number of 1 is configured to need a feedback. After a network device sends the DCI to a terminal device, although the HARQ process with a process number of 0 is no longer occupied, the HARQ process with a process number of 1 is kept occupied before the network device receives feedback information for the TB2. Consequently, the network device cannot schedule a plurality of TBs. In other words, before the network device receives the feedback information for the TB2, even if the HARQ process with a process number of 0 needs no feedback, the HARQ process with a process number of 0 still cannot be used to transmit data due to impact of the HARQ process with a process number of 1.

Therefore, for the multi-TB scheduling scenario in the IoT NTN system, embodiments of this application provide a communication method, to enable all of HARQ processes respectively corresponding to a plurality of TBs to need feedbacks or enable none of the HARQ processes to need a feedback, to eliminate mutual impact between HARQ processes due to different HARQ feedback configurations.

The following describes the technical solutions in embodiments of this application with reference to accompanying drawings in embodiments of this application. In descriptions of this application, "/" indicates an "or" relationship between associated objects, unless otherwise specified. For example, A/B may indicate A or B. In this application, "and/or" describes only an association relationship between associated objects, and indicates that three relationships may exist. For example, A and/or B may indicate the following three cases: Only A exists, both A and B exist, and only B exists, where A and B may be in a singular form or a plural form. In addition, in the descriptions of this application, "a plurality of" means two or more, unless otherwise specified. "At least one of the following items (pieces)" or a similar expression thereof indicates any combination of these items, including a single item (piece) or any combination of a plurality of items (pieces). For example, at least one of a, b, or c may indicate a, b, c, a and b, a and c, b and c, or a, b, and c, where a, b, and c may be in a singular form or a plural form. In addition, to clearly describe the technical solutions in embodiments of this application, the terms "first", "second", and the like are used in embodiments of this application to distinguish between identical items or similar items that have basically same functions or purposes. A person skilled in the art can understand that the terms "first", "second", and the like do not limit a quantity or an execution sequence, and the terms "first", "second", and the like do not indicate a definite difference. In addition, in embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. To be precise, the term "example", "for example", or the like is intended to present a related concept in a specific manner for ease of understanding.

It should be noted that a network architecture and a service scenario described in embodiments of this application are intended to describe the technical solutions in embodiments of this application more clearly, and do not constitute a limitation on the technical solutions provided in embodiments of this application. A person of ordinary skill in the art can know that the technical solutions provided in embodiments of this application are also applicable to similar technical problems with evolution of the network architecture and emergence of a new service scenario.

The technical solutions in embodiments of this application may be applied to various communication systems. The communication system may be a 3rd generation partnership project (3rd generation partnership project, 3GPP) communication system, for example, a long term evolution (long term evolution, LTE) system, a 5G communication system, an IoT system, an NTN system, a vehicle-to-everything (vehicle-to-everything, V2X) system, a device-to-device (device-to-device, D2D) communication system, a machine-to-machine (machine-to-machine, M2M) communication system, or another future-oriented similar new system, for example, a 6th generation (6th generation, 6G) system. This is not specifically limited in embodiments of this application. In addition, the terms "system" and "network" are interchangeable.

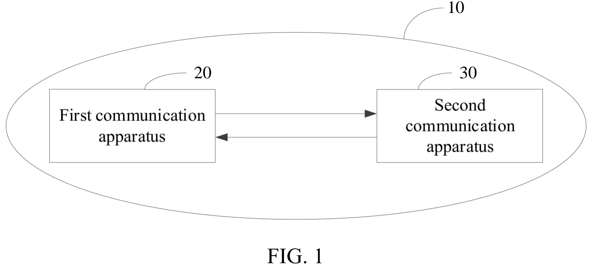

FIG. 1 shows a communication system 10 according to an embodiment of this application. The communication system 10 includes a first communication apparatus 20 and a second communication apparatus 30. The first communication apparatus 20 may wirelessly communicate with the second communication apparatus 30.

It can be understood that FIG. 1 is merely a diagram and does not constitute a limitation on a quantity of first communication apparatuses 20 or second communication apparatuses 30 in the communication system 10. The communication system 10 may include at least one first communication apparatus 20 and at least one second communication apparatus 30.

Optionally, different first communication apparatuses 20 may communicate with each other. Optionally, different second communication apparatuses 30 may communicate with each other. The first communication apparatus 20 and/or the second communication apparatus 30 may be located at a fixed position, or may be movable.

Optionally, the first communication apparatus 20 and the second communication apparatus 30 in this embodiment of this application may be deployed on land, including an indoor or outdoor scenario and a handheld or vehicle-mounted scenario, or may be deployed on water, or may be deployed on an airplane, a balloon, and a satellite in the air. An application scenario of the first communication apparatus 20 and the second communication apparatus 30 is not limited in embodiments of this application.

Optionally, the first communication apparatus 20 and the second communication apparatus 30 in this embodiment of this application may communicate with each other through a licensed spectrum, or may communicate with each other through an unlicensed spectrum, or may communicate with each other through both a licensed spectrum and an unlicensed spectrum. The first communication apparatus and the second communication apparatus may communicate with each other through a spectrum below 6 gigahertz (gigahertz, GHz), or may communicate with each other through a spectrum above 6 GHz, or may communicate with each other through both a spectrum below 6 GHz and a spectrum above 6 GHz. A spectrum resource used between the first communication apparatus 20 and the second communication apparatus 30 is not limited in embodiments of this application.

Optionally, the first communication apparatus 20 or the second communication apparatus 30 in this embodiment of this application may be a general-purpose device or a dedicated device. This is not specifically limited in embodiments of this application.

Optionally, the first communication apparatus 20 and the second communication apparatus 30 may be devices of different types. For example, one of the first communication apparatus 20 and the second communication apparatus 30 is a network device, and the other is a terminal device. Alternatively, the first communication apparatus 20 and the second communication apparatus 30 may be devices of a same type. For example, both the first communication apparatus 20 and the second communication apparatus 30 are terminal devices, or both the first communication apparatus 20 and the second communication apparatus 30 are network devices. This is not specifically limited in embodiments of this application.

Optionally, the network device in embodiments of this application is a device that connects the terminal device to a wireless network. The network device in embodiments of this application may include base stations (base station) in various forms. For example, the network device may be a macro base station, a micro base station (also referred to as a small cell), a relay station, an access point, a transmission point (transmission point, TP), an evolved NodeB (evolved NodeB, eNodeB), a transmission reception point (transmission reception point, TRP), a next-generation NodeB (next-generation NodeB, gNB) in a 5G mobile communication system, a device that implements a base station function in a communication system evolved after 5G, a mobile switching center, or a device that performs a base station function in device-to-device (Device-to-Device, D2D), vehicle-to-everything (vehicle-to-everything, V2X), or machine-to-machine (machine-to-machine, M2M) communication; or may be a network device in an NTN communication system, to be specific, may be deployed on a high-altitude platform or a satellite; or may be a module or a unit that performs some functions of a base station, for example, may be a central unit (central unit, CU) or a distributed unit (distributed unit, DU) in a cloud access network (cloud radio access network, C-RAN) system. A specific technology and a specific device form that are used for the network device are not limited in embodiments of this application. All or some of functions of the network device may alternatively be implemented by using a software function running on hardware, or may be implemented by using a virtualization function instantiated on a platform (for example, a cloud platform). In this application, the network device is a radio access network (radio access network, RAN) device, unless otherwise specified.

Optionally, the terminal device in embodiments of this application may be a device with a wireless transceiver function, and may also be referred to as a terminal (terminal). The terminal device may be specifically user equipment (user equipment, UE), an access terminal, a subscriber unit (subscriber unit), a subscriber station, a mobile station (mobile station), customer-premises equipment (customer-premises equipment, CPE), a remote station, a remote terminal, a mobile device, a mobile terminal, a user terminal, a wireless communication device, a user agent, a user apparatus, or the like. Alternatively, the terminal device may be a satellite phone, a cellular phone, a smartphone, a cordless phone, a session initiation protocol (session initiation protocol, SIP) phone, a wireless data card, a wireless modem, a tablet computer, a computer with a wireless transceiver function, a wireless local loop (wireless local loop, WLL) station, a personal digital assistant (personal digital assistant, PDA), a handheld device with a wireless communication function, a computing device or another processing device connected to a wireless modem, a vehicle-mounted device, a communication device mounted on a high-altitude aircraft, a wearable device, an uncrewed aerial vehicle, a robot, a smart point of sale (point of sale, POS) machine, a machine type communication device, a terminal device in D2D, a vehicle-mounted terminal device in V2X, an on-board unit (on-board unit, OBU), a vehicle-mounted communication terminal (telematics box, T-box), a vehicle or roadside unit (roadside unit, RSU), a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. A specific technology and a specific device form that are used for the terminal device are not limited in embodiments of this application. For example, the terminal device may alternatively be a chip or a module. All or some of functions of the terminal device may alternatively be implemented by using a software function running on hardware, or may be implemented by using a virtualization function instantiated on a platform (for example, a cloud platform).

Interaction between the first communication apparatus 20 shown in FIG. 1 and any second communication apparatus 30 is used as an example. In the communication method provided in embodiments of this application, the second communication apparatus 30 obtains a first initial HARQ feedback configuration corresponding to a first HARQ process and a second initial HARQ feedback configuration corresponding to a second HARQ process, where the first initial HARQ feedback configuration includes that a HARQ feedback is needed or no HARQ feedback is needed, and the second initial HARQ feedback configuration includes that a HARQ feedback is needed or no HARQ feedback is needed. The first communication apparatus sends first control information to the second communication apparatus, and the second communication apparatus receives the first control information, where the first control information includes first indication information corresponding to a first transport block and a second transport block, the first transport block corresponds to the first HARQ process, the second transport block corresponds to the second HARQ process, and the first indication information indicates whether to toggle the first initial HARQ feedback configuration and/or the second initial HARQ feedback configuration. Further, the second communication apparatus determines, based on the first indication information, that both the first HARQ process and the second HARQ process need HARQ feedbacks, or determines that neither the first HARQ process nor the second HARQ process needs a HARQ feedback.

Specific implementations and technical effects of this solution are described in detail in subsequent method embodiments. Details are not described herein.

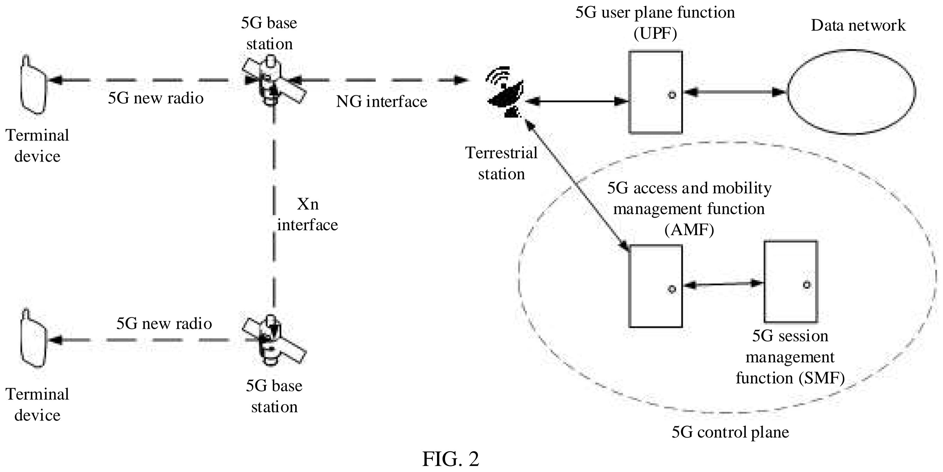

Optionally, the communication system 10 shown in FIG. 1 may be used in a network architecture of an NTN system. For example, FIG. 2 is a diagram of an architecture of an NTN system to which the communication system 10 is applicable.

In the architecture of the NTN system shown in FIG. 2, a terrestrial terminal device accesses a network through 5G new radio, and a 5G base station is deployed on a satellite and is connected to a terrestrial core network through a radio link. In addition, there is a radio link between satellites, to perform signaling interaction and user data transmission between 5G base stations. Network elements in FIG. 2 and their interfaces are described as follows:
Terminal device: a mobile device that supports 5G new radio, where the mobile device is typically a mobile phone, a pad, or the like. The terminal device may access a satellite network through an air interface and initiates services such as calls and internet access.

5G base station: mainly provides a radio access service, schedules a radio resource for a terminal device that accesses the 5G base station, and provides a reliable radio transmission protocol and data encryption protocol, and the like.

5G core network: provides user access control, mobility management, session management, user security authentication, charging, and other services. The 5G core network includes a plurality of functional units, and may include a 5G control plane function entity and a 5G data plane function entity. An access and mobility management function (access and mobility management function, AMF) unit provides user access management, security authentication, mobility management, and other functions. A user plane function (user plane function, UPF) unit manages user plane data transmission, traffic statistics, and other functions. A session management function (session management function, SMF) unit provides session management, internet protocol (internet protocol, IP) address allocation and management for a terminal, and other functions.

Terrestrial station: forwards signaling and service data between a satellite base station (to be specific, a 5G base station deployed on a satellite) and a terrestrial 5G core network.

5G new radio: a radio link between a terminal device and a 5G base station.

Xn interface: an interface between 5G base stations, and mainly used for signaling interaction, for example, a handover.

NG interface: an interface between a 5G base station and a 5G core network, and mainly used for exchanging signaling, for example, NAS signaling, of the core network, and service data of a user.

The terminal device in FIG. 2 may be the second communication apparatus 30 in the communication system 10, and the 5G base station in FIG. 2 may be the first communication apparatus 20 in the communication system 10.

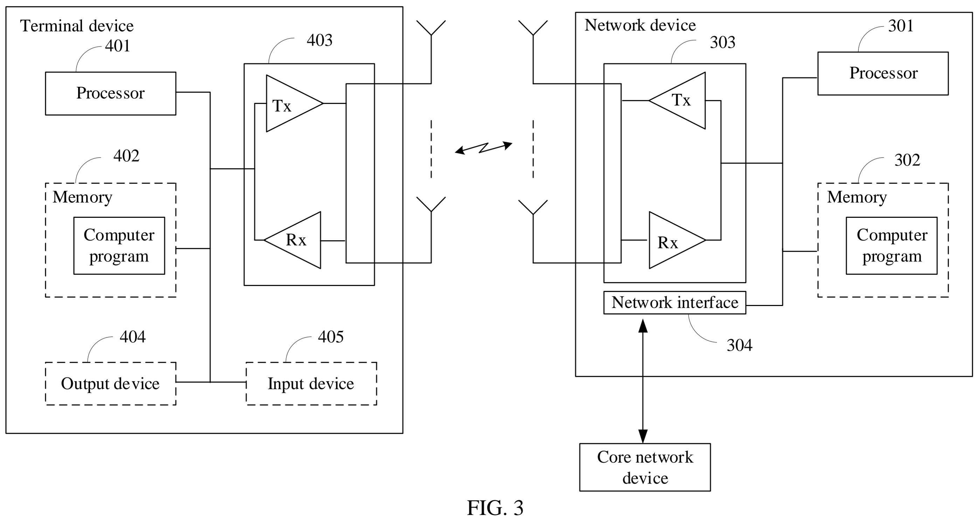

Optionally, if the first communication apparatus 20 in FIG. 1 is a network device, a structure of a network device shown in FIG. 3 may be used for the first communication apparatus 20. If the second communication apparatus 30 in FIG. 1 is a terminal device, a structure of a terminal device shown in FIG. 3 may be used for the second communication apparatus 30.

The terminal device includes at least one processor 401 and at least one transceiver 403. Optionally, the terminal device may further include at least one memory 402, at least one output device 404, or at least one input device 405.

The processor 401, the memory 402, and the transceiver 403 are connected through a communication line. The communication line may include a channel for transmitting information between the foregoing components.

The processor 401 may be a general-purpose central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor. During specific implementation, in an embodiment, the processor 401 may alternatively include a plurality of CPUs, and the processor 401 may be a single-core processor or a multi-core processor. The processor herein may be one or more devices, circuits, or processing cores for processing data.

The memory 402 may be an apparatus with a storage function. For example, the memory 402 may be a read-only memory (read-only memory, ROM) or another type of static storage device capable of storing static information and instructions, or a random access memory (random access memory, RAM) or another type of dynamic storage device capable of storing information and instructions, or may be a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium capable of carrying or storing expected program code in a form of instructions or data structures and capable of being accessed by a computer, but is not limited thereto. The memory 402 may exist independently, and is connected to the processor 401 through a communication line. The memory 402 may alternatively be integrated with the processor 401.

The memory 402 is configured to store computer-executable instructions for performing the solutions of this application, and the processor 401 controls execution of the computer-executable instructions. Specifically, the processor 401 is configured to execute the computer-executable instructions stored in the memory 402, to implement the communication method in embodiments of this application.

Alternatively, optionally, in embodiments of this application, the processor 401 may perform a processing-related function in a communication method provided in the following embodiments of this application, and the transceiver 403 communicates with another device or a communication network. This is not specifically limited in embodiments of this application.

Optionally, the computer-executable instructions in embodiments of this application may also be referred to as application program code or computer program code. This is not specifically limited in embodiments of this application.

The transceiver 403 may be configured to communicate, through any apparatus similar to a transceiver, with another device or a communication network, for example, Ethernet, a radio access network, or a wireless local area network (wireless local area network, WLAN). The transceiver 403 includes a transmitter (transmitter, Tx) and a receiver (receiver, Rx).

The output device 404 communicates with the processor 401, and may display information in a plurality of manners. For example, the output device 404 may be a liquid crystal display (liquid crystal display, LCD), a light emitting diode (light emitting diode, LED) display device, a cathode ray tube (cathode ray tube, CRT) display device, or a projector (projector).

The input device 405 communicates with the processor 401, and may receive user input in a plurality of manners. For example, the input device 405 may be a mouse, a keyboard, a touchscreen device, or a sensor device.

The network device includes at least one processor 301, at least one transceiver 303, and at least one network interface 304. Optionally, the network device may further include at least one memory 302. The processor 301, the memory 302, the transceiver 303, and the network interface 304 are connected through a communication line. The network interface 304 is configured to connect to a core network device through a link (for example, an S1 interface), or connect to a network interface of another network device through a wired or wireless link (for example, an X2 interface) (not shown in FIG. 3). This is not specifically limited in embodiments of this application. In addition, for related descriptions of the processor 301, the memory 302, and the transceiver 303, refer to the descriptions of the processor 401, the memory 402, and the transceiver 403 of the terminal device. Details are not described herein again.

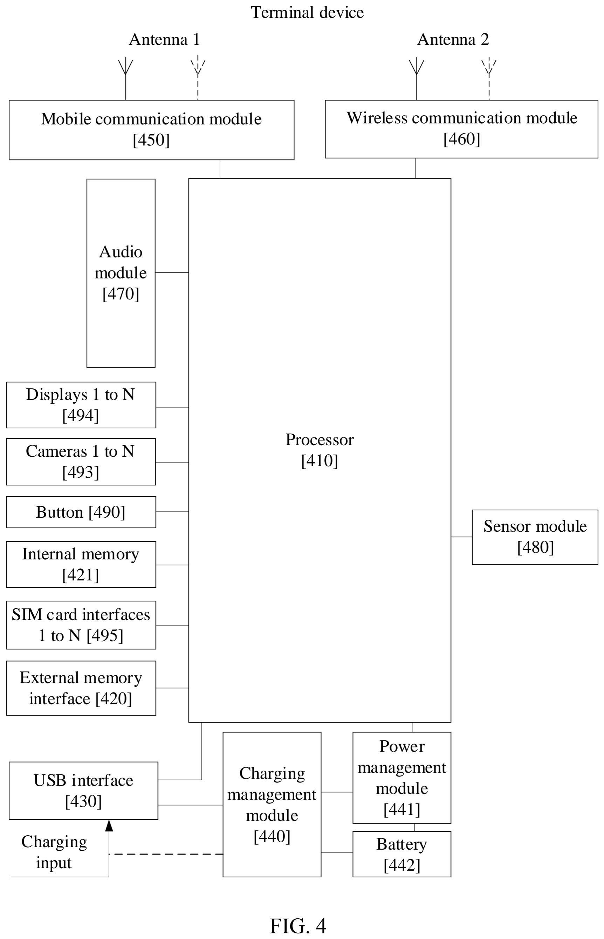

With reference to the diagram of the structure of the terminal device shown in FIG. 3, for example, FIG. 4 shows a specific form of a structure of a terminal device according to an embodiment of this application.

In some embodiments, a function of the processor 401 in FIG. 3 may be implemented by a processor 410 in FIG. 4.

In some embodiments, a function of the transceiver 403 in FIG. 3 may be implemented by an antenna 1, an antenna 2, a mobile communication module 450, a wireless communication module 460, or the like in FIG. 4. The mobile communication module 450 may provide a solution applied to the terminal device for wireless communication technologies such as LTE, NR, or future mobile communication. The wireless communication module 460 may provide a solution applied to the terminal device for wireless communication technologies such as a WLAN (for example, a Wi-Fi network), Bluetooth (Bluetooth, BT), a global navigation satellite system (global navigation satellite system, GNSS), frequency modulation (frequency modulation, FM), near field communication (near field communication, NFC), or infrared. In some embodiments, the antenna 1 of the terminal device is coupled to the mobile communication module 450, and the antenna 2 is coupled to the wireless communication module 460, so that the terminal device can communicate with a network and another device by using a wireless communication technology.

In some embodiments, a function of the memory 402 in FIG. 3 may be implemented by an internal memory 421 in FIG. 4, an external memory connected to an external memory interface 420, or the like.

In some embodiments, a function of the output device 404 in FIG. 3 may be implemented by a display 494 in FIG. 4.

In some embodiments, a function of the input device 405 in FIG. 3 may be implemented by a mouse, a keyboard, a touchscreen device, or a sensor module 480 in FIG. 4.

In some embodiments, as shown in FIG. 4, the terminal device may further include one or more of an audio module 470, a camera 493, a button 490, a subscriber identity module (subscriber identity module, SIM) card interface 495, a universal serial bus (universal serial bus, USB) interface 430, a charging management module 440, a power management module 441, and a battery 442.

It can be understood that the structure shown in FIG. 4 does not constitute a specific limitation on the terminal device. For example, in some other embodiments of this application, the terminal device may include more or fewer components than those shown in the figure, or may combine some components, or may split some components, or may arrange different component arrangements. The components shown in the figure may be implemented by hardware, software, or a combination of software and hardware.

With reference to FIG. 1 to FIG. 4, the following describes in detail the communication method provided in embodiments of this application by using an example in which the first communication apparatus 20 shown in FIG. 1 interacts with any second communication apparatus 30.

It should be noted that names of messages between network elements, names of parameters in messages, or the like in the following embodiments of this application are merely examples, and there may alternatively be other names during specific implementation. This is not specifically limited in embodiments of this application.

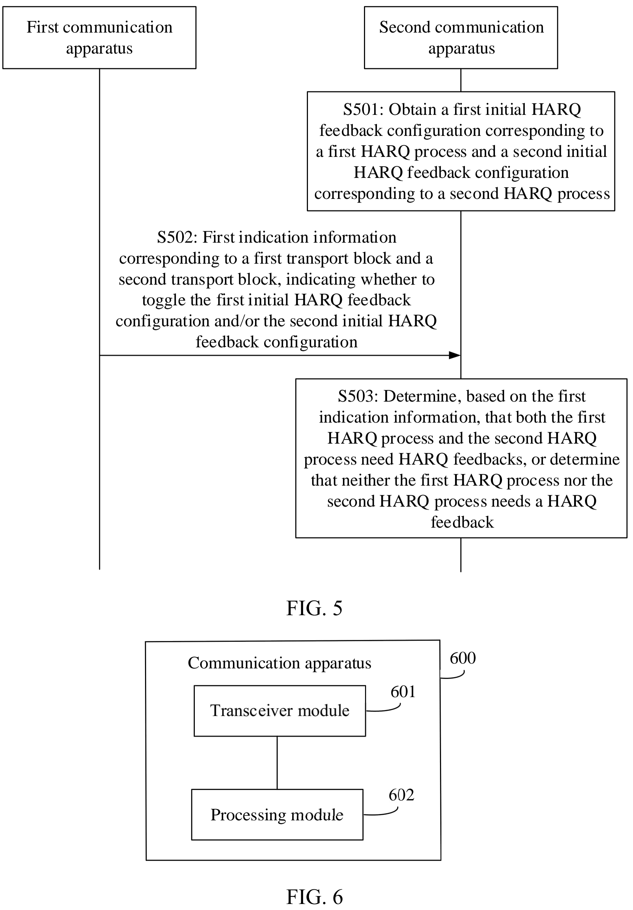

FIG. 5 shows a communication method according to an embodiment of this application. FIG. 5 shows the method by using an example in which a first communication apparatus and a second communication apparatus serve as execution entities of interaction. However, execution entities of the interaction are not limited in this application. For example, the first communication apparatus in FIG. 5 may alternatively be a chip, a chip system, or a processor that supports the communication apparatus in implementing the method, or may be a logic module or software that can implement all or some of functions of the first communication apparatus; and the second communication apparatus in FIG. 5 may alternatively be a chip, a chip system, or a processor that supports the communication apparatus in implementing the method, or may be a logic module or software that can implement all or some of functions of the second communication apparatus. The communication method includes S501 to S503.

S501: The second communication apparatus obtains a first initial HARQ feedback configuration corresponding to a first HARQ process and a second initial HARQ feedback configuration corresponding to a second HARQ process. The first initial HARQ feedback configuration includes that a HARQ feedback is needed or no HARQ feedback is needed. The second initial HARQ feedback configuration includes that a HARQ feedback is needed or no HARQ feedback is needed.

S502: The first communication apparatus sends first control information to the second communication apparatus, and correspondingly, the second communication apparatus receives the first control information. The first control information includes first indication information corresponding to a first transport block and a second transport block. The first transport block corresponds to the first HARQ process. The second transport block corresponds to the second HARQ process. The first indication information indicates whether to toggle the first initial HARQ feedback configuration and/or the second initial HARQ feedback configuration.

S503: The second communication apparatus determines, based on the first indication information, that both the first HARQ process and the second HARQ process need HARQ feedbacks, or determines that neither the first HARQ process nor the second HARQ process needs a HARQ feedback.

According to the communication method provided in this embodiment of this application, the second communication apparatus may determine, based on the first indication information, whether to toggle the first initial HARQ feedback configuration and/or the second initial HARQ feedback configuration, to achieve consistency between HARQ feedback configurations of the two HARQ processes, to be specific, neither of the HARQ processes needs a feedback or both of the HARQ processes need feedbacks, to avoid mutual impact between HARQ processes with different HARQ feedback configurations. If neither of the HARQ processes needs a feedback, a system throughput may be increased. If both of the HARQ processes need feedbacks, the first communication apparatus may be assisted in adaptive link adjustment.

In S501, the first HARQ process and the second HARQ process are different HARQ processes, and process numbers of the first HARQ process and the second HARQ process are different. For example, a process number of the first HARQ process is 0, and a process number of the second HARQ process is 1; or a process number of the first HARQ process may be 1, and a process number of the second HARQ process is 0. Certainly, the first HARQ process or the second HARQ process may alternatively correspond to another process number, for example, 2 or 3. The process numbers of the first HARQ process and the second HARQ process are not specifically limited in this embodiment of this application.

In this embodiment of this application, initial HARQ feedback configurations are configured for both the first HARQ process and the second HARQ process, and the initial HARQ feedback configurations include that a HARQ feedback is needed or no HARQ feedback is needed. An initial HARQ feedback configuration corresponding to the first HARQ process is referred to as the first initial HARQ feedback configuration, and an initial HARQ feedback configuration corresponding to the second HARQ process is referred to as the second initial HARQ feedback configuration. In other words, the first HARQ process corresponds to the first initial HARQ feedback configuration, and the second HARQ process corresponds to the second initial HARQ feedback configuration. The first initial HARQ feedback configuration includes that a HARQ feedback is needed or no HARQ feedback is needed. The second initial HARQ feedback configuration also includes that a HARQ feedback is needed or no HARQ feedback is needed.

That a HARQ feedback is needed means that, after receiving data transmitted through a corresponding HARQ process, a receiving end needs to send feedback information (or referred to as sending a HARQ feedback) to a transmitting end to indicate a decoding result of the received data. For example, the feedback information sent by the receiving end may be an ACK indicating that decoding succeeds, or a NACK indicating that decoding fails.

That no HARQ feedback is needed means that, after receiving data transmitted through a corresponding HARQ process, a receiving end does not need to send feedback information to a transmitting end to indicate a decoding result of the received data.

In a possible implementation, the first initial HARQ feedback configuration and the second initial HARQ feedback configuration may be independently configured. In other words, whether the first initial HARQ feedback configuration indicates that a HARQ feedback is needed or indicates that no HARQ feedback is needed does not affect the second initial HARQ feedback configuration. Similarly, the first initial HARQ feedback configuration is not affected by the second initial HARQ feedback configuration. In this implementation, configuration information for configuring the first initial HARQ feedback configuration and configuration information for configuring the second initial HARQ feedback configuration may be carried in same signaling or different signaling.

For example, it is assumed that the first initial HARQ feedback configuration and the second initial HARQ feedback configuration are configured by using a 1-bit field, the 1^{st} bit in the field may be used to configure the first initial HARQ feedback configuration, and the 2^{nd} bit in the field may be used to configure the second initial HARQ feedback configuration. Alternatively, for another example, the first initial HARQ feedback configuration is configured by using a 1-bit field, and the second initial HARQ feedback configuration is configured by using another 1-bit field.

In another possible implementation, the first initial HARQ feedback configuration and the second initial HARQ feedback configuration may be configured in a bundled manner. This may also be understood as that the first initial HARQ feedback configuration and the second initial HARQ feedback configuration may be a same initial HARQ feedback configuration.

For example, both the first initial HARQ feedback configuration and the second initial HARQ feedback configuration may be configured by using a 1-bit field. A value of the bit being 1 indicates that both the first initial HARQ feedback configuration and the second initial HARQ feedback configuration indicate that a HARQ feedback is needed. The value of the bit being 0 indicates that neither the first initial HARQ feedback configuration nor the second initial HARQ feedback configuration indicates that a HARQ feedback is needed.

Optionally, the first initial HARQ feedback configuration and the second initial HARQ feedback configuration may be sent by the first communication apparatus to the second communication apparatus. For example, the second communication apparatus receives RRC configuration information from the first communication apparatus, and the RRC configuration information includes the first initial HARQ feedback configuration and the second initial HARQ feedback configuration. In other words, the first initial HARQ feedback configuration and the second initial HARQ feedback configuration may be configured by using RRC signaling. Optionally, RRC signaling for configuring the first initial HARQ feedback configuration and the second initial HARQ feedback configuration may be cell-level or device-level (for example, UE-level).

Alternatively, the first initial HARQ feedback configuration and the second initial HARQ feedback configuration may be preconfigured on the first communication apparatus. For example, before the first communication apparatus is delivered from a factory, the first initial HARQ feedback configuration and the second initial HARQ feedback configuration are preconfigured on the first communication apparatus.

For S502, the first transport block and the second transport block are first described.

In this embodiment of this application, the first transport block and the second transport block include data sent by the first communication apparatus to the second communication apparatus. It can be understood that, if the first communication apparatus is a network device and the second communication apparatus is a terminal device, the first transport block and the second transport block may also be referred to as downlink transport blocks, and include downlink data sent by the first communication apparatus to the second communication apparatus.

Optionally, the second communication apparatus may determine whether a plurality of transport blocks can be scheduled based on received DCI.

It should be noted that, in this embodiment of this application, the first transport block and the second transport block are scheduled based on a single piece of DCI.

For example, if the second communication apparatus determines that an npdsch-MultiTB-Config field in the RRC signaling is configured as "enabled" and a value of a Number of scheduled TB for Unicast field in the received DCI is 1, the second communication apparatus determines that a plurality of transport blocks are scheduled based on the received DCI. If the second communication apparatus determines that at least one of the following two conditions is not met: an npdsch-MultiTB-Config field in the RRC signaling is configured as "enabled", and a value of a Number of scheduled TB for Unicast field in the first control information is 1, the second communication apparatus determines that only one transport block is scheduled based on the received DCI.

It should be noted that, in this embodiment of this application, the "first" and the "second" in the "first transport block" and the "second transport block" are merely intended to distinguish between the two transport blocks, but do not constitute a limitation on a related order, for example, an order of the two transport blocks in time domain or frequency domain, or an order in which the two transport blocks are scheduled based on the DCI. For example, the first transport block may be the 1^{st} transport block scheduled based on the DCI or the 2^{nd} transport block scheduled based on the DCI. Similarly, the second transport block may be the 2^{nd} transport block scheduled based on the DCI or the 1^{st} transport block scheduled based on the DCI.

In this embodiment of this application, the first transport block corresponds to the first HARQ process, and the second transport block corresponds to the second HARQ process.

In a possible implementation, the first communication apparatus may send indication information to the second communication apparatus, to indicate that the first transport block corresponds to the first HARQ process and the second transport block corresponds to the second HARQ process. Optionally, the indication information may be carried in the DCI for scheduling the first transport block and the second transport block, or may be carried in the first control information described below (the first control information may alternatively be DCI for scheduling the first transport block and the second transport block, and details are described below). For example, a HARQ process corresponding to the first transport block or the second transport block may be indicated by a 1-bit field. A value of the bit being 0 indicates that a process number of the corresponding HARQ process is 0. The value of the bit being 1 indicates that a process number of the corresponding HARQ process is 1. It is assumed that the process number of the first HARQ process is 0 and the process number of the second HARQ process is 1. A bit value of the field that corresponds to the first transport block may be set to 0, and a bit value of the field that corresponds to the second transport block may be set to 1.

In another possible implementation, a correspondence between the first transport block and the first HARQ process, and a correspondence between the second transport block and the second HARQ process may be predefined, defined in a protocol, or pre-agreed upon. This implementation may also be understood as follows: The first communication apparatus and the second communication apparatus determine, by default, that the first transport block corresponds to the first HARQ process and the second transport block corresponds to the second HARQ process. For example, the first communication apparatus and the second communication apparatus may pre-agree upon that, when two transport blocks are scheduled based on DCI, a process number of a HARQ process corresponding to the 1^{st} transport block scheduled based on the DCI is 0, and a process number of a HARQ process corresponding to the 2^{nd} transport block scheduled based on the DCI is 1. In this case, the first transport block is the 1^{st} transport block scheduled based on the DCI, the second transport block is the 2^{nd} transport block scheduled based on the DCI, the process number of the first HARQ process is 0, and the process number of the second HARQ process is 1.

In S502, the first communication apparatus sends the first indication information to the second communication apparatus, to enable the second communication apparatus to perform HARQ feedback for both or neither of the first transport block and the second transport block that are received. The first indication information corresponds to the first transport block and the second transport block, and indicates whether to toggle the first initial HARQ feedback configuration and/or the second initial HARQ feedback configuration.

The first indication information is carried in the first control information. For example, the first control information may be an RRC message, a media access control (media access control, MAC) layer control element (MAC control element, MAC CE), or DCI for scheduling the first transport block and the second transport block.

Optionally, the first control information may further include transmission information of the first transport block and the second transport block. The second communication apparatus may receive and decode the first transport block and the second transport block based on the transmission information of the first transport block and the second transport block in the first control information. For example, the first control information may include a modulation and coding scheme (modulation and coding scheme, MCS), an NDI, or a redundancy version (redundancy version, RV) that correspond to each of the first transport block and the second transport block.

It should be noted that the first indication information indicates, only for the first transport block and the second transport block, whether to toggle the first initial HARQ feedback configuration and/or the second initial HARQ feedback configuration. In other words, the first indication information takes effect only for indicating whether the first transport block and the second transport block need feedbacks, and the first indication information does not take effect for another subsequent transport block corresponding to the first HARQ process or the second HARQ process.

For example, it is assumed that the process number of the first HARQ process is 0 and the process number of the second HARQ process is 1. Both the first initial HARQ feedback configuration and the second initial HARQ feedback configuration indicate that a feedback is needed. The 1^{st} DCI sent by the first communication apparatus to the second communication apparatus is used to schedule a TB1 (the first transport block) and a TB2 (the second transport block). The TB1 corresponds to the first HARQ process, and the TB2 corresponds to the second HARQ process. If the 1^{st} DCI includes first indication information indicating to toggle the first initial HARQ feedback configuration and the second initial HARQ feedback configuration, the second communication apparatus determines, based on the first indication information, that decoding results of the TB1 and the TB2 do not need to be fed back. However, both the first initial HARQ feedback configuration and the second initial HARQ feedback configuration remain unchanged and still need feedbacks. If the second communication apparatus subsequently receives the 2^{nd} DCI, the 2^{nd} DCI is used to schedule a TB3 and a TB4, the TB3 corresponds to the first HARQ process, the TB4 corresponds to the second HARQ process, and the 2^{nd} DCI does not include indication information indicating whether to toggle the first initial HARQ feedback configuration and the second initial HARQ feedback configuration, the second communication apparatus determines, based on the first initial HARQ feedback configuration and the second initial HARQ feedback configuration, that decoding results of the TB3 and the TB4 need to be fed back.

Optionally, the first indication information may be a reused existing field. Alternatively, the first indication information may be a new field. A specific implementation of the first indication information is not limited in this embodiment of this application.

For example, an existing field indicating a HARQ feedback resource, namely, a HARQ-ACK resource field, may be reused as the first indication information, where the field includes 4 bits. In other words, the first indication information may further indicate a HARQ feedback resource. The HARQ feedback resource is used by the second communication apparatus to send a HARQ feedback corresponding to the first transport block and a HARQ feedback corresponding to the second transport block.

Optionally, the first indication information may occupy 1 bit in the first control information. In this implementation, whether to toggle the first initial HARQ feedback configuration and/or the second initial HARQ feedback configuration may be indicated based on different values of the bit. Certainly, the first indication information may alternatively occupy a plurality of bits in the first control information. In this implementation, whether to toggle the first initial HARQ feedback configuration and/or the second initial HARQ feedback configuration may be indicated based on different bit sequences of the plurality of bits. A quantity of bits of the first indication information is not limited in this embodiment of this application.

For example, assuming that the first control information is DCI, 1 bit in any one of fields including more than 1 bit, for example, a modulation and coding scheme field (4 bits), a scheduling delay field (4 bits), a resource assignment field (4 bits), or a repetition number field (4 bits), in existing DCI may be used as the first indication information. Because an existing field is reused as the first indication information, in this solution, impact on flexibility of an original protocol can be reduced while signaling overheads are reduced. In addition, the second communication apparatus does not need to additionally detect first control information with another length, so that complexity of detection by the second communication apparatus may not be increased.

For another example, assuming that the first control information is DCI, a 1-bit field may be additionally introduced into the DCI as the first indication information. In other words, a length of DCI into which the first indication information is introduced is greater than a length of original DCI by 1 bit. Refer to an existing single-TB scheduling solution. An application scenario of this solution may be as follows: After DCI is configured, by using higher layer RRC signaling, to be able to indicate a HARQ feedback configuration, the DCI can directly indicate a HARQ feedback configuration or indicate to toggle an initial HARQ feedback configuration configured by using RRC signaling. Therefore, when DCI is not configured, by using RRC signaling, to be able to indicate a HARQ feedback configuration, the second communication apparatus performs blind detection based on an original DCI length; and when DCI is configured, by using RRC signaling, to be able to indicate a HARQ feedback, the second communication apparatus performs blind detection based on a new DCI length. In other words, in either case, the second communication apparatus can determine, based on an RRC configuration, a length of DCI that needs to be detected. Therefore, in this solution, impact on flexibility of an original protocol can be avoided without increasing complexity of detection by the second communication apparatus.

In S503, the second communication apparatus may determine, based on the first indication information, that both the first HARQ process and the second HARQ process need HARQ feedbacks, or determine that neither the first HARQ process nor the second HARQ process needs a HARQ feedback. This may also be understood as follows: The second communication apparatus may determine, based on the first indication information, that both the first transport block and the second transport block need HARQ feedbacks, or determine that neither the first transport block nor the second transport block needs a HARQ feedback.

Specifically, the second communication apparatus may determine, based on the first indication information, a toggling result of the first initial HARQ feedback configuration and/or a toggling result of the second initial HARQ feedback configuration. Then the second communication apparatus determines, based on the toggling result of the first initial HARQ feedback configuration and/or the toggling result of the second initial HARQ feedback configuration, whether HARQ feedback needs to be performed for the first HARQ process and the second HARQ process.

It can be understood that, if the first indication information does not indicate whether to toggle the first initial HARQ feedback configuration or the second initial HARQ feedback configuration, the second communication apparatus does not toggle an initial HARQ feedback configuration that is not indicated. For example, if the first indication information does not indicate whether the second initial HARQ feedback configuration needs to be toggled, the second communication apparatus does not toggle the second initial HARQ feedback configuration.

Optionally, the second communication apparatus and the first communication apparatus may pre-agree upon that, if the toggling result of the first initial HARQ feedback configuration and/or the toggling result of the second initial HARQ feedback configuration indicate/indicates that at least one of the first HARQ process and the second HARQ process is a HARQ process that needs a HARQ feedback, the second communication apparatus may determine that both the first HARQ process and the second HARQ process need HARQ feedbacks.

Alternatively, the second communication apparatus and the first communication apparatus may pre-agree upon that, if the toggling result of the first initial HARQ feedback configuration and/or the toggling result of the second initial HARQ feedback configuration indicate/indicates that at least one of the first HARQ process and the second HARQ process is a HARQ process that needs no HARQ feedback, the second communication apparatus may determine that neither the first HARQ process nor the second HARQ process needs a HARQ feedback.

With reference to several specific implementations of indicating, by the first indication information, whether to toggle the first initial HARQ feedback configuration and/or the second initial HARQ feedback configuration in this embodiment of this application, the following provides detailed descriptions about determining, by the second communication apparatus based on the first indication information, whether the first HARQ process and the second HARQ process need HARQ feedbacks.

Implementation 1: The first indication information indicates to toggle an initial HARQ feedback configuration in the first initial HARQ feedback configuration and the second initial HARQ feedback configuration from indicating that no feedback is needed to indicating that a feedback is needed; or the first indication information indicates to toggle an initial HARQ feedback configuration in the first initial HARQ feedback configuration and the second initial HARQ feedback configuration from indicating that a feedback is needed to indicating that no feedback is needed.

It can be understood that, because the first indication information indicates to toggle an initial HARQ feedback configuration in one state, regardless of whether the first initial HARQ feedback configuration and the second initial HARQ feedback configuration indicate that a feedback is needed or indicate that no feedback is needed, after the second communication apparatus performs toggling based on the first indication information, the two initial HARQ feedback configurations are in a same state. Therefore, the second communication apparatus may determine, based on the first indication information, that both the first HARQ process and the second HARQ process need feedbacks or neither the first HARQ process nor the second HARQ process needs a feedback.

For ease of understanding, the following describes the implementation 1 with reference to an example.

For example, it is assumed that the first indication information is a 1-bit field, a value of the bit being 0 indicates to toggle an initial HARQ feedback configuration from indicating that a feedback is needed to indicating that no feedback is needed, and the value of the bit being 1 indicates to toggle an initial HARQ feedback configuration from indicating that no feedback is needed to indicating that a feedback is needed.

In the following four different cases, a result of determining, by the second communication apparatus based on the first indication information, whether the first HARQ process and the second HARQ process need HARQ feedbacks is described.
(1) Both the first initial HARQ feedback configuration and the second initial HARQ feedback configuration indicate that no feedback is needed.

If a bit value of the first indication information received by the second communication apparatus is 0, because neither of the first initial HARQ feedback configuration and the second initial HARQ feedback configuration indicates that a feedback is needed, the second communication apparatus determines, based on the first indication information, to toggle neither the first initial HARQ feedback configuration nor the second initial HARQ feedback configuration, and both initial HARQ feedback configurations still indicate that no feedback is needed. The second communication apparatus determines, based on a toggling result, that neither the first HARQ process nor the second HARQ process needs a feedback.

If a bit value of the first indication information received by the second communication apparatus is 1, because both the first initial HARQ feedback configuration and the second initial HARQ feedback configuration indicate that no feedback is needed, the second communication apparatus toggles, based on the first indication information, both the first initial HARQ feedback configuration and the second initial HARQ feedback configuration to indicating that a feedback is needed. The second communication apparatus determines, based on a toggling result, that both the first HARQ process and the second HARQ process need feedbacks.

(2) Both the first initial HARQ feedback configuration and the second initial HARQ feedback configuration indicate that a feedback is needed.

If a bit value of the first indication information received by the second communication apparatus is 0, because both the first initial HARQ feedback configuration and the second initial HARQ feedback configuration indicate that a feedback is needed, the second communication apparatus toggles, based on the first indication information, both the first initial HARQ feedback configuration and the second initial HARQ feedback configuration to indicating that no feedback is needed. The second communication apparatus determines, based on a toggling result, that neither the first HARQ process nor the second HARQ process needs a feedback.

If a bit value of the first indication information received by the second communication apparatus is 1, because neither of the first initial HARQ feedback configuration and the second initial HARQ feedback configuration indicates that no feedback is needed, the second communication apparatus determines, based on the first indication information, to toggle neither the first initial HARQ feedback configuration nor the second initial HARQ feedback configuration, and both initial HARQ feedback configurations still indicate that a feedback is needed. The second communication apparatus determines, based on a toggling result, that both the first HARQ process and the second HARQ process need feedbacks.

(3) The first initial HARQ feedback configuration indicates that a feedback is needed, and the second initial HARQ feedback configuration indicates that no feedback is needed.

If a bit value of the first indication information received by the second communication apparatus is 0, because the first initial HARQ feedback configuration indicates that a feedback is needed, the second communication apparatus toggles, based on the first indication information, the first initial HARQ feedback configuration to indicating that no feedback is needed; and because the second initial HARQ feedback configuration indicates that no feedback is needed, the second communication apparatus determines, based on the first indication information, not to toggle the second initial HARQ feedback configuration. The second communication apparatus determines, based on a toggling result, that neither the first HARQ process nor the second HARQ process needs a feedback.

If a bit value of the first indication information received by the second communication apparatus is 1, because the first initial HARQ feedback configuration indicates that a feedback is needed, the second communication apparatus determines, based on the first indication information, not to toggle the first initial HARQ feedback configuration; and because the second initial HARQ feedback configuration indicates that no feedback is needed, the second communication apparatus toggles, based on the first indication information, the second initial HARQ feedback configuration to indicating that a feedback is needed. The second communication apparatus determines, based on a toggling result, that both the first HARQ process and the second HARQ process need feedbacks.

(4) The first initial HARQ feedback configuration indicates that no feedback is needed, and the second initial HARQ feedback configuration indicates that a feedback is needed.

If a bit value of the first indication information received by the second communication apparatus is 0, because the first initial HARQ feedback configuration indicates that no feedback is needed, the second communication apparatus determines, based on the first indication information, not to toggle the first initial HARQ feedback configuration; and because the second initial HARQ feedback configuration indicates that a feedback is needed, the second communication apparatus toggles, based on the first indication information, the second initial HARQ feedback configuration to indicating that no feedback is needed. The second communication apparatus determines, based on a toggling result, that neither the first HARQ process nor the second HARQ process needs a feedback.

If a bit value of the first indication information received by the second communication apparatus is 1, because the first initial HARQ feedback configuration indicates that no feedback is needed, the second communication apparatus toggles, based on the first indication information, the first initial HARQ feedback configuration to indicating that a feedback is needed; and because the second initial HARQ feedback configuration indicates that a feedback is needed, the second communication apparatus determines, based on the first indication information, not to toggle the second initial HARQ feedback configuration. The second communication apparatus determines, based on a toggling result, that both the first HARQ process and the second HARQ process need feedbacks.

For another example, it is assumed that the first indication information is a reused existing field indicating a HARQ feedback resource, and the field includes 4 bits. The field being 1111 indicates to toggle an initial HARQ feedback configuration from indicating that a feedback is needed to indicating that no feedback is needed. The field being a value other than 1111 indicates to toggle an initial HARQ feedback configuration from indicating that no feedback is needed to indicating that a feedback is needed.

For a result of determining, by the second communication apparatus based on the first indication information, whether the first HARQ process and the second HARQ process need HARQ feedbacks in a case in which the field is 1111 and a result in a case in which the field is a value other than 1111, refer to corresponding descriptions in the example in which the first indication information is a 1-bit field. Details are not described herein again.

Optionally, when the field is a value other than 1111, the field may further indicate a HARQ feedback resource. After determining, based on the field, that both the first HARQ process and the second HARQ process need feedbacks, the second communication apparatus may further send a HARQ feedback for the first transport block and a HARQ feedback for the second transport block to the first communication apparatus through the HARQ feedback resource indicated by the field. For example, a mapping relationship between different bit sequences of the field and HARQ feedback resources may be established. The mapping relationship may be pre-agreed upon by the second communication apparatus and the first communication apparatus, or may be configured or indicated by the first communication apparatus to the second communication apparatus.

Implementation 2: When the first initial HARQ feedback configuration is the same as the second initial HARQ feedback configuration, the first indication information indicates to toggle the first initial HARQ feedback configuration and the second initial HARQ feedback configuration, or the first indication information indicates not to toggle the first initial HARQ feedback configuration or the second initial HARQ feedback configuration.

It can be understood that, because the first initial HARQ feedback configuration is the same as the second initial HARQ feedback configuration, regardless of whether the second communication apparatus toggles the first initial HARQ feedback configuration and the second initial HARQ feedback configuration based on the first indication information or does not toggle the first initial HARQ feedback configuration or the second initial HARQ feedback configuration based on the first indication information, statuses of the first initial HARQ feedback configuration and the second initial HARQ feedback configuration can be unified. Therefore, the second communication apparatus may determine, based on the first indication information, that both the first HARQ process and the second HARQ process need feedbacks or neither the first HARQ process nor the second HARQ process needs a feedback.

For ease of understanding, the following describes the implementation 2 with reference to an example.

For example, it is assumed that the first indication information is a 1-bit field, and when the first initial HARQ feedback configuration is the same as the second initial HARQ feedback configuration, a value of the bit being 0 indicates not to toggle the first initial HARQ feedback configuration or the second initial HARQ feedback configuration, and the value of the bit being 1 indicates to toggle the first initial HARQ feedback configuration and the second initial HARQ feedback configuration.

In the following two different cases, a result of determining, by the second communication apparatus based on the first indication information, whether the first HARQ process and the second HARQ process need HARQ feedbacks is described.
(1) Both the first initial HARQ feedback configuration and the second initial HARQ feedback configuration indicate that no feedback is needed.

If a bit value of the first indication information received by the second communication apparatus is 0, the second communication apparatus does not toggle the first initial HARQ feedback configuration or the second initial HARQ feedback configuration based on the first indication information. The second communication apparatus determines, based on a toggling result, that neither the first HARQ process nor the second HARQ process needs a feedback.

If a bit value of the first indication information received by the second communication apparatus is 1, the second communication apparatus toggles, based on the first indication information, both the first initial HARQ feedback configuration and the second initial HARQ feedback configuration to indicating that a feedback is needed. The second communication apparatus determines, based on a toggling result, that both the first HARQ process and the second HARQ process need feedbacks.

(2) Both the first initial HARQ feedback configuration and the second initial HARQ feedback configuration indicate that a feedback is needed.

If a bit value of the first indication information received by the second communication apparatus is 0, the second communication apparatus does not toggle the first initial HARQ feedback configuration or the second initial HARQ feedback configuration based on the first indication information. The second communication apparatus determines, based on a toggling result, that both the first HARQ process and the second HARQ process need feedbacks.

If a bit value of the first indication information received by the second communication apparatus is 1, the second communication apparatus toggles, based on the first indication information, both the first initial HARQ feedback configuration and the second initial HARQ feedback configuration to indicating that no feedback is needed. The second communication apparatus determines, based on a toggling result, that neither the first HARQ process nor the second HARQ process needs a feedback.

Implementation 3: When the first initial HARQ feedback configuration is different from the second initial HARQ feedback configuration, the first indication information indicates to toggle the first initial HARQ feedback configuration, or the first indication information indicates to toggle the second initial HARQ feedback configuration.

It can be understood that, because the first initial HARQ feedback configuration is different from the second initial HARQ feedback configuration, statuses of the first initial HARQ feedback configuration and the second initial HARQ feedback configuration can be unified provided that either of the initial HARQ feedback configurations is toggled. Therefore, the second communication apparatus may determine, based on the first indication information, that both the first HARQ process and the second HARQ process need feedbacks or neither the first HARQ process nor the second HARQ process needs a feedback.

For ease of understanding, the following describes the implementation 3 with reference to an example.

For example, it is assumed that the first indication information is a 1-bit field, and when the first initial HARQ feedback configuration is different from the second initial HARQ feedback configuration, a value of the bit being 0 indicates to toggle the first initial HARQ feedback configuration, and the value of the bit being 1 indicates to toggle the second initial HARQ feedback configuration.

In the following two different cases, a result of determining, by the second communication apparatus based on the first indication information, whether the first HARQ process and the second HARQ process need HARQ feedbacks is described.
(1) The first initial HARQ feedback configuration indicates that a feedback is needed, and the second initial HARQ feedback configuration indicates that no feedback is needed.

If a bit value of the first indication information received by the second communication apparatus is 0, based on the first indication information, the second communication apparatus toggles the first initial HARQ feedback configuration to indicating that no feedback is needed, and does not toggle the second initial HARQ feedback configuration. The second communication apparatus determines, based on a toggling result, that neither the first HARQ process nor the second HARQ process needs a feedback.

If a bit value of the first indication information received by the second communication apparatus is 1, based on the first indication information, the second communication apparatus toggles the second initial HARQ feedback configuration to indicating that a feedback is needed, and does not toggle the first initial HARQ feedback configuration. The second communication apparatus determines, based on a toggling result, that both the first HARQ process and the second HARQ process need feedbacks.

(2) The first initial HARQ feedback configuration indicates that no feedback is needed, and the second initial HARQ feedback configuration indicates that a feedback is needed.

If a bit value of the first indication information received by the second communication apparatus is 0, based on the first indication information, the second communication apparatus toggles the first initial HARQ feedback configuration to indicating that a feedback is needed, and does not toggle the second initial HARQ feedback configuration. The second communication apparatus determines, based on a toggling result, that both the first HARQ process and the second HARQ process need feedbacks.

If a bit value of the first indication information received by the second communication apparatus is 1, based on the first indication information, the second communication apparatus toggles the second initial HARQ feedback configuration to indicating that no feedback is needed, and does not toggle the first initial HARQ feedback configuration. The second communication apparatus determines, based on a toggling result, that neither the first HARQ process nor the second HARQ process needs a feedback.

Optionally, the implementation 3 may be combined with the implementation 2.

Implementation 4: When the first initial HARQ feedback configuration is different from the second initial HARQ feedback configuration, the first indication information indicates to toggle an initial HARQ feedback configuration in the first initial HARQ feedback configuration and the second initial HARQ feedback configuration from indicating that no feedback is needed to indicating that a feedback is needed; or the first indication information indicates to toggle an initial HARQ feedback configuration in the first initial HARQ feedback configuration and the second initial HARQ feedback configuration from indicating that a feedback is needed to indicating that no feedback is needed.

Based on a reason similar to that in the implementation 1, in the implementation 4, statuses of a first initial HARQ feedback configuration and a second initial HARQ feedback configuration that are obtained through toggling based on the first indication information can also be unified, and the second communication apparatus may determine, based on the first indication information, that both the first HARQ process and the second HARQ process need feedbacks or neither the first HARQ process nor the second HARQ process needs a feedback.

For ease of understanding, the following describes the implementation 4 with reference to an example.

For example, it is assumed that the first indication information is a 1-bit field, and when the first initial HARQ feedback configuration is different from the second initial HARQ feedback configuration, a value of the bit being 0 indicates to toggle an initial HARQ feedback configuration from indicating that a feedback is needed to indicating that no feedback is needed, and the value of the bit being 1 indicates to toggle an initial HARQ feedback configuration from indicating that no feedback is needed to indicating that a feedback is needed.

In the following two different cases, a result of determining, by the second communication apparatus based on the first indication information, whether the first HARQ process and the second HARQ process need HARQ feedbacks is described.
(1) The first initial HARQ feedback configuration indicates that a feedback is needed, and the second initial HARQ feedback configuration indicates that no feedback is needed.

If a bit value of the first indication information received by the second communication apparatus is 0, because the first initial HARQ feedback configuration indicates that a feedback is needed, the second communication apparatus toggles, based on the first indication information, the first initial HARQ feedback configuration to indicating that no feedback is needed; and because the second initial HARQ feedback configuration indicates that no feedback is needed, the second communication apparatus determines, based on the first indication information, not to toggle the second initial HARQ feedback configuration. The second communication apparatus determines, based on a toggling result, that neither the first HARQ process nor the second HARQ process needs a feedback.

If a bit value of the first indication information received by the second communication apparatus is 1, because the first initial HARQ feedback configuration indicates that a feedback is needed, the second communication apparatus determines, based on the first indication information, not to toggle the first initial HARQ feedback configuration; and because the second initial HARQ feedback configuration indicates that no feedback is needed, the second communication apparatus toggles, based on the first indication information, the second initial HARQ feedback configuration to indicating that a feedback is needed. The second communication apparatus determines, based on a toggling result, that both the first HARQ process and the second HARQ process need feedbacks.

(2) The first initial HARQ feedback configuration indicates that no feedback is needed, and the second initial HARQ feedback configuration indicates that a feedback is needed.

If a bit value of the first indication information received by the second communication apparatus is 0, because the first initial HARQ feedback configuration indicates that no feedback is needed, the second communication apparatus determines, based on the first indication information, not to toggle the first initial HARQ feedback configuration; and because the second initial HARQ feedback configuration indicates that a feedback is needed, the second communication apparatus toggles, based on the first indication information, the second initial HARQ feedback configuration to indicating that no feedback is needed. The second communication apparatus determines, based on a toggling result, that neither the first HARQ process nor the second HARQ process needs a feedback.

If a bit value of the first indication information received by the second communication apparatus is 1, because the first initial HARQ feedback configuration indicates that no feedback is needed, the second communication apparatus toggles, based on the first indication information, the first initial HARQ feedback configuration to indicating that a feedback is needed; and because the second initial HARQ feedback configuration indicates that a feedback is needed, the second communication apparatus determines, based on the first indication information, not to toggle the second initial HARQ feedback configuration. The second communication apparatus determines, based on a toggling result, that both the first HARQ process and the second HARQ process need feedbacks.

Optionally, the implementation 4 may be combined with the implementation 2.

Implementation 5: When the first initial HARQ feedback configuration is different from the second initial HARQ feedback configuration, the first indication information indicates not to toggle the first initial HARQ feedback configuration or the second initial HARQ feedback configuration; or the first indication information indicates to toggle an initial HARQ feedback configuration in the first initial HARQ feedback configuration and the second initial HARQ feedback configuration from indicating that no feedback is needed to indicating that a feedback is needed; or the first indication information indicates to toggle an initial HARQ feedback configuration in the first initial HARQ feedback configuration and the second initial HARQ feedback configuration from indicating that a feedback is needed to indicating that no feedback is needed.

In this implementation, the second communication apparatus and the first communication apparatus may pre-agree upon that, if the toggling result of the first initial HARQ feedback configuration and/or the toggling result of the second initial HARQ feedback configuration that are/is determined based on the first indication information indicate/indicates that at least one of the first HARQ process and the second HARQ process is a HARQ process that needs a HARQ feedback, the second communication apparatus may determine that both the first HARQ process and the second HARQ process need HARQ feedbacks.

Alternatively, the second communication apparatus and the first communication apparatus may pre-agree upon that, if the toggling result of the first initial HARQ feedback configuration and/or the toggling result of the second initial HARQ feedback configuration that are/is determined based on the first indication information indicate/indicates that at least one of the first HARQ process and the second HARQ process is a HARQ process that needs no HARQ feedback, the second communication apparatus may determine that neither the first HARQ process nor the second HARQ process needs a HARQ feedback.

Optionally, content pre-agreed upon by the second communication apparatus and the first communication apparatus may be related to a meaning of the first indication information. The second communication apparatus may determine, based on different meanings of the first indication information, different agreements to be fulfilled.

For ease of understanding, the following describes the implementation 5 with reference to an example.

For example, it is assumed that the first indication information is a 1-bit field, and when the first initial HARQ feedback configuration is different from the second initial HARQ feedback configuration, a value of the bit being 0 indicates not to toggle the first initial HARQ feedback configuration or the second initial HARQ feedback configuration, and the value of the bit being 1 indicates to toggle an initial HARQ feedback configuration from indicating that a feedback is needed to indicating that no feedback is needed, or indicates to toggle an initial HARQ feedback configuration from indicating that no feedback is needed to indicating that a feedback is needed.

Whether the value of the bit being 1 indicates to toggle an initial HARQ feedback configuration from indicating that a feedback is needed to indicating that no feedback is needed, or indicates to toggle an initial HARQ feedback configuration from indicating that no feedback is needed to indicating that a feedback is needed may be pre-agreed upon by the first communication apparatus and the second communication apparatus, or may be configured or indicated by the first communication apparatus to the second communication apparatus.

Further, assuming that the value of the bit being 1 indicates to toggle an initial HARQ feedback configuration from indicating that a feedback is needed to indicating that no feedback is needed, corresponding content pre-agreed upon by the second communication apparatus and the first communication apparatus is as follows: If the toggling result of the first initial HARQ feedback configuration and/or the toggling result of the second initial HARQ feedback configuration that are/is determined based on the first indication information indicate/indicates that at least one of the first HARQ process and the second HARQ process is a HARQ process that needs a HARQ feedback, the second communication apparatus may determine that both the first HARQ process and the second HARQ process need HARQ feedbacks.

Assuming that the value of the bit being 1 indicates to toggle an initial HARQ feedback configuration from indicating that no feedback is needed to indicating that a feedback is needed, corresponding content pre-agreed upon by the second communication apparatus and the first communication apparatus is as follows: If the toggling result of the first initial HARQ feedback configuration and/or the toggling result of the second initial HARQ feedback configuration that are/is determined based on the first indication information indicate/indicates that at least one of the first HARQ process and the second HARQ process is a HARQ process that needs no HARQ feedback, the second communication apparatus may determine that neither the first HARQ process nor the second HARQ process needs a HARQ feedback.

In the following two different cases, a result of determining, by the second communication apparatus based on the first indication information, whether the first HARQ process and the second HARQ process need HARQ feedbacks is described.
(1) The first initial HARQ feedback configuration indicates that a feedback is needed, and the second initial HARQ feedback configuration indicates that no feedback is needed.

When a bit value of the first indication information being 1 indicates to toggle an initial HARQ feedback configuration from indicating that a feedback is needed to indicating that no feedback is needed, if the bit value of the first indication information received by the second communication apparatus is 0, the second communication apparatus determines, based on the first indication information, to toggle neither the first initial HARQ feedback configuration nor the second initial HARQ feedback configuration. A toggling result indicates that the first HARQ process needs a feedback and the second HARQ process needs no feedback. In this case, the second communication apparatus determines, based on a pre-agreement, that both the first HARQ process and the second HARQ process need feedbacks.

If the bit value of the first indication information received by the second communication apparatus is 1, the second communication apparatus determines, based on the first indication information, to toggle the first initial HARQ feedback configuration to indicating that no feedback is needed, and not to toggle the second initial HARQ feedback configuration. The second communication apparatus determines, based on a toggling result, that neither the first HARQ process nor the second HARQ process needs a feedback.

When a bit value of the first indication information being 1 indicates to toggle an initial HARQ feedback configuration from indicating that no feedback is needed to indicating that a feedback is needed, if the bit value of the first indication information received by the second communication apparatus is 0, the second communication apparatus determines, based on the first indication information, to toggle neither the first initial HARQ feedback configuration nor the second initial HARQ feedback configuration. A toggling result indicates that the first HARQ process needs a feedback and the second HARQ process needs no feedback. In this case, the second communication apparatus determines, based on a pre-agreement, that neither the first HARQ process nor the second HARQ process needs a feedback.

If the bit value of the first indication information received by the second communication apparatus is 1, the second communication apparatus determines, based on the first indication information, to toggle the second initial HARQ feedback configuration to indicating that a feedback is needed, and not to toggle the first initial HARQ feedback configuration. The second communication apparatus determines, based on a toggling result, that both the first HARQ process and the second HARQ process need feedbacks.

(2) The first initial HARQ feedback configuration indicates that no feedback is needed, and the second initial HARQ feedback configuration indicates that a feedback is needed.

When a bit value of the first indication information being 1 indicates to toggle an initial HARQ feedback configuration from indicating that a feedback is needed to indicating that no feedback is needed, if the bit value of the first indication information received by the second communication apparatus is 0, the second communication apparatus determines, based on the first indication information, to toggle neither the first initial HARQ feedback configuration nor the second initial HARQ feedback configuration. A toggling result indicates that the first HARQ process needs no feedback and the second HARQ process needs a feedback. In this case, the second communication apparatus determines, based on a pre-agreement, that both the first HARQ process and the second HARQ process need feedbacks.

If the bit value of the first indication information received by the second communication apparatus is 1, the second communication apparatus determines, based on the first indication information, to toggle the second initial HARQ feedback configuration to indicating that no feedback is needed, and not to toggle the first initial HARQ feedback configuration. The second communication apparatus determines, based on a toggling result, that neither the first HARQ process nor the second HARQ process needs a feedback.

When a bit value of the first indication information being 1 indicates to toggle an initial HARQ feedback configuration from indicating that no feedback is needed to indicating that a feedback is needed, if the bit value of the first indication information received by the second communication apparatus is 0, the second communication apparatus determines, based on the first indication information, to toggle neither the first initial HARQ feedback configuration nor the second initial HARQ feedback configuration. A toggling result indicates that the first HARQ process needs no feedback and the second HARQ process needs a feedback. In this case, the second communication apparatus determines, based on a pre-agreement, that neither the first HARQ process nor the second HARQ process needs a feedback.

If the bit value of the first indication information received by the second communication apparatus is 1, the second communication apparatus determines, based on the first indication information, to toggle the first initial HARQ feedback configuration to indicating that a feedback is needed, and not to toggle the second initial HARQ feedback configuration. The second communication apparatus determines, based on a toggling result, that both the first HARQ process and the second HARQ process need feedbacks.

Optionally, the implementation 5 may be combined with the implementation 2.

Implementation 6: When the first initial HARQ feedback configuration is different from the second initial HARQ feedback configuration, the first indication information indicates to toggle a target initial HARQ feedback configuration, or the first indication information indicates not to toggle a target initial HARQ feedback configuration.

Optionally, when a subframe number of a subframe used to receive the first control information is an odd number, the target initial HARQ feedback configuration is the first initial HARQ feedback configuration; or when a subframe number of a subframe used to receive the first control information is an even number, the target initial HARQ feedback configuration is the second initial HARQ feedback configuration.

Alternatively, when a subframe number of a subframe used to receive the first control information is an odd number, the target initial HARQ feedback configuration is the second initial HARQ feedback configuration; or when a subframe number of a subframe used to receive the first control information is an even number, the target initial HARQ feedback configuration is the first initial HARQ feedback configuration.

In this implementation, the second communication apparatus and the first communication apparatus may pre-agree upon that, if the toggling result of the first initial HARQ feedback configuration and/or the toggling result of the second initial HARQ feedback configuration that are/is determined based on the first indication information indicate/indicates that at least one of the first HARQ process and the second HARQ process is a HARQ process that needs a HARQ feedback, the second communication apparatus may determine that both the first HARQ process and the second HARQ process need HARQ feedbacks.

Alternatively, the second communication apparatus and the first communication apparatus may pre-agree upon that, if the toggling result of the first initial HARQ feedback configuration and/or the toggling result of the second initial HARQ feedback configuration that are/is determined based on the first indication information indicate/indicates that at least one of the first HARQ process and the second HARQ process is a HARQ process that needs no HARQ feedback, the second communication apparatus may determine that neither the first HARQ process nor the second HARQ process needs a HARQ feedback.

For ease of understanding, the following describes the implementation 6 with reference to an example.

For example, it is assumed that the first indication information is a 1-bit field, and when the first initial HARQ feedback configuration is different from the second initial HARQ feedback configuration, a value of the bit being 0 indicates not to toggle the target initial HARQ feedback configuration, and the value of the bit being 1 indicates to toggle the target initial HARQ feedback configuration. If the subframe number of the subframe used to receive the first control information is an odd number, the target initial HARQ feedback configuration is the first initial HARQ feedback configuration; or if the subframe number of the subframe used to receive the first control information is an even number, the target initial HARQ feedback configuration is the second initial HARQ feedback configuration.

It is assumed that the second communication apparatus and the first communication apparatus pre-agree upon that, if the toggling result of the first initial HARQ feedback configuration and/or the toggling result of the second initial HARQ feedback configuration that are/is determined based on the first indication information indicate/indicates that at least one of the first HARQ process and the second HARQ process is a HARQ process that needs a HARQ feedback, the second communication apparatus may determine that both the first HARQ process and the second HARQ process need HARQ feedbacks.

In the following two different cases, a result of determining, by the second communication apparatus based on the first indication information, whether the first HARQ process and the second HARQ process need HARQ feedbacks is described.
(1) The first initial HARQ feedback configuration indicates that a feedback is needed, and the second initial HARQ feedback configuration indicates that no feedback is needed.

If a bit value of the first indication information received by the second communication apparatus is 0, the second communication apparatus determines, based on the first indication information, to toggle neither the first initial HARQ feedback configuration nor the second initial HARQ feedback configuration. A toggling result indicates that the first HARQ process needs a feedback and the second HARQ process needs no feedback. In this case, the second communication apparatus determines, based on a pre-agreement, that both the first HARQ process and the second HARQ process need feedbacks.

If a bit value of the first indication information received by the second communication apparatus is 1 and the subframe number of the subframe used to receive the first control information is an odd number, based on the first indication information, the second communication apparatus toggles the first initial HARQ feedback configuration to indicating that no feedback is needed, and does not toggle the second initial HARQ feedback configuration. The second communication apparatus determines, based on a toggling result, that neither the first HARQ process nor the second HARQ process needs a feedback.

If a bit value of the first indication information received by the second communication apparatus is 1 and the subframe number of the subframe used to receive the first control information is an even number, based on the first indication information, the second communication apparatus toggles the second initial HARQ feedback configuration to indicating that a feedback is needed, and does not toggle the first initial HARQ feedback configuration. The second communication apparatus determines, based on a toggling result, that both the first HARQ process and the second HARQ process need feedbacks.

(2) The first initial HARQ feedback configuration indicates that no feedback is needed, and the second initial HARQ feedback configuration indicates that a feedback is needed.

If a bit value of the first indication information received by the second communication apparatus is 0, the second communication apparatus determines, based on the first indication information, to toggle neither the first initial HARQ feedback configuration nor the second initial HARQ feedback configuration. A toggling result indicates that the first HARQ process needs no feedback and the second HARQ process needs a feedback. In this case, the second communication apparatus determines, based on a pre-agreement, that both the first HARQ process and the second HARQ process need feedbacks.

If a bit value of the first indication information received by the second communication apparatus is 1 and the subframe number of the subframe used to receive the first control information is an odd number, based on the first indication information, the second communication apparatus toggles the first initial HARQ feedback configuration to indicating that a feedback is needed, and does not toggle the second initial HARQ feedback configuration. The second communication apparatus determines, based on a toggling result, that both the first HARQ process and the second HARQ process need feedbacks.

If a bit value of the first indication information received by the second communication apparatus is 1 and the subframe number of the subframe used to receive the first control information is an even number, based on the first indication information, the second communication apparatus toggles the second initial HARQ feedback configuration to indicating that no feedback is needed, and does not toggle the first initial HARQ feedback configuration. The second communication apparatus determines, based on a toggling result, that neither the first HARQ process nor the second HARQ process needs a feedback.

Optionally, the implementation 6 may be combined with the implementation 2.

Implementation 7: The first indication information indicates to toggle a target initial HARQ feedback configuration, or the first indication information indicates not to toggle a target initial HARQ feedback configuration.

Optionally, when a subframe number of a subframe used to receive the first control information is an odd number, the target initial HARQ feedback configuration is the first initial HARQ feedback configuration; or when a subframe number of a subframe used to receive the first control information is an even number, the target initial HARQ feedback configuration is the second initial HARQ feedback configuration.

Alternatively, when a subframe number of a subframe used to receive the first control information is an odd number, the target initial HARQ feedback configuration is the second initial HARQ feedback configuration; or when a subframe number of a subframe used to receive the first control information is an even number, the target initial HARQ feedback configuration is the first initial HARQ feedback configuration.

In this implementation, the second communication apparatus and the first communication apparatus may pre-agree upon that, if the toggling result of the first initial HARQ feedback configuration and/or the toggling result of the second initial HARQ feedback configuration that are/is determined based on the first indication information indicate/indicates that at least one of the first HARQ process and the second HARQ process is a HARQ process that needs a HARQ feedback, the second communication apparatus may determine that both the first HARQ process and the second HARQ process need HARQ feedbacks.

Alternatively, the second communication apparatus and the first communication apparatus may pre-agree upon that, if the toggling result of the first initial HARQ feedback configuration and/or the toggling result of the second initial HARQ feedback configuration that are/is determined based on the first indication information indicate/indicates that at least one of the first HARQ process and the second HARQ process is a HARQ process that needs no HARQ feedback, the second communication apparatus may determine that neither the first HARQ process nor the second HARQ process needs a HARQ feedback.

For ease of understanding, the following describes the implementation 7 with reference to an example.

For example, it is assumed that the first indication information is a 1-bit field, a value of the bit being 0 indicates not to toggle the target initial HARQ feedback configuration, and the value of the bit being 1 indicates to toggle the target initial HARQ feedback configuration. If the subframe number of the subframe used to receive the first control information is an odd number, the target initial HARQ feedback configuration is the first initial HARQ feedback configuration; or if the subframe number of the subframe used to receive the first control information is an even number, the target initial HARQ feedback configuration is the second initial HARQ feedback configuration.

It is assumed that the second communication apparatus and the first communication apparatus pre-agree upon that, if the toggling result of the first initial HARQ feedback configuration and/or the toggling result of the second initial HARQ feedback configuration that are/is determined based on the first indication information indicate/indicates that at least one of the first HARQ process and the second HARQ process is a HARQ process that needs a HARQ feedback, the second communication apparatus may determine that both the first HARQ process and the second HARQ process need HARQ feedbacks.

In the following four different cases, a result of determining, by the second communication apparatus based on the first indication information, whether the first HARQ process and the second HARQ process need HARQ feedbacks is described.
(1) Both the first initial HARQ feedback configuration and the second initial HARQ feedback configuration indicate that no feedback is needed.

If a bit value of the first indication information received by the second communication apparatus is 0, the second communication apparatus determines, based on the first indication information, to toggle neither the first initial HARQ feedback configuration nor the second initial HARQ feedback configuration, and both initial HARQ feedback configurations still indicate that no feedback is needed. The second communication apparatus determines, based on a toggling result, that neither the first HARQ process nor the second HARQ process needs a feedback.

If a bit value of the first indication information received by the second communication apparatus is 1 and the subframe number of the subframe used to receive the first control information is an odd number, based on the first indication information, the second communication apparatus toggles the first initial HARQ feedback configuration to indicating that a feedback is needed, and does not toggle the second initial HARQ feedback configuration. A toggling result indicates that the first HARQ process needs a feedback and the second HARQ process needs no feedback. In this case, the second communication apparatus determines, based on a pre-agreement, that both the first HARQ process and the second HARQ process need feedbacks.

If a bit value of the first indication information received by the second communication apparatus is 1 and the subframe number of the subframe used to receive the first control information is an even number, based on the first indication information, the second communication apparatus toggles the second initial HARQ feedback configuration to indicating that a feedback is needed, and does not toggle the first initial HARQ feedback configuration. A toggling result indicates that the second HARQ process needs a feedback and the first HARQ process needs no feedback. In this case, the second communication apparatus determines, based on a pre-agreement, that both the first HARQ process and the second HARQ process need feedbacks.

(2) Both the first initial HARQ feedback configuration and the second initial HARQ feedback configuration indicate that a feedback is needed.

If a bit value of the first indication information received by the second communication apparatus is 0, the second communication apparatus determines, based on the first indication information, to toggle neither the first initial HARQ feedback configuration nor the second initial HARQ feedback configuration, and both initial HARQ feedback configurations still indicate that a feedback is needed. The second communication apparatus determines, based on a toggling result, that both the first HARQ process and the second HARQ process need feedbacks.

If a bit value of the first indication information received by the second communication apparatus is 1 and the subframe number of the subframe used to receive the first control information is an odd number, based on the first indication information, the second communication apparatus toggles the first initial HARQ feedback configuration to indicating that no feedback is needed, and does not toggle the second initial HARQ feedback configuration. A toggling result indicates that the first HARQ process needs no feedback and the second HARQ process needs a feedback. In this case, the second communication apparatus determines, based on a pre-agreement, that both the first HARQ process and the second HARQ process need feedbacks.

If a bit value of the first indication information received by the second communication apparatus is 1 and the subframe number of the subframe used to receive the first control information is an even number, based on the first indication information, the second communication apparatus toggles the second initial HARQ feedback configuration to indicating that no feedback is needed, and does not toggle the first initial HARQ feedback configuration. A toggling result indicates that the second HARQ process needs no feedback and the first HARQ process needs a feedback. In this case, the second communication apparatus determines, based on a pre-agreement, that both the first HARQ process and the second HARQ process need feedbacks.

(3) The first initial HARQ feedback configuration indicates that a feedback is needed, and the second initial HARQ feedback configuration indicates that no feedback is needed.

If a bit value of the first indication information received by the second communication apparatus is 0, the second communication apparatus determines, based on the first indication information, to toggle neither the first initial HARQ feedback configuration nor the second initial HARQ feedback configuration. A toggling result indicates that the first HARQ process needs a feedback and the second HARQ process needs no feedback. In this case, the second communication apparatus determines, based on a pre-agreement, that both the first HARQ process and the second HARQ process need feedbacks.

If a bit value of the first indication information received by the second communication apparatus is 1 and the subframe number of the subframe used to receive the first control information is an odd number, based on the first indication information, the second communication apparatus toggles the first initial HARQ feedback configuration to indicating that no feedback is needed, and does not toggle the second initial HARQ feedback configuration. The second communication apparatus determines, based on a toggling result, that neither the first HARQ process nor the second HARQ process needs a feedback.

If a bit value of the first indication information received by the second communication apparatus is 1 and the subframe number of the subframe used to receive the first control information is an even number, based on the first indication information, the second communication apparatus toggles the second initial HARQ feedback configuration to indicating that a feedback is needed, and does not toggle the first initial HARQ feedback configuration. The second communication apparatus determines, based on a toggling result, that both the first HARQ process and the second HARQ process need feedbacks.

(4) The first initial HARQ feedback configuration indicates that no feedback is needed, and the second initial HARQ feedback configuration indicates that a feedback is needed.

If a bit value of the first indication information received by the second communication apparatus is 0, the second communication apparatus determines, based on the first indication information, to toggle neither the first initial HARQ feedback configuration nor the second initial HARQ feedback configuration. A toggling result indicates that the first HARQ process needs no feedback and the second HARQ process needs a feedback. In this case, the second communication apparatus determines, based on a pre-agreement, that both the first HARQ process and the second HARQ process need feedbacks.

If a bit value of the first indication information received by the second communication apparatus is 1 and the subframe number of the subframe used to receive the first control information is an odd number, based on the first indication information, the second communication apparatus toggles the first initial HARQ feedback configuration to indicating that a feedback is needed, and does not toggle the second initial HARQ feedback configuration. The second communication apparatus determines, based on a toggling result, that both the first HARQ process and the second HARQ process need feedbacks.

If a bit value of the first indication information received by the second communication apparatus is 1 and the subframe number of the subframe used to receive the first control information is an even number, based on the first indication information, the second communication apparatus toggles the second initial HARQ feedback configuration to indicating that no feedback is needed, and does not toggle the first initial HARQ feedback configuration. The second communication apparatus determines, based on a toggling result, that neither the first HARQ process nor the second HARQ process needs a feedback.

Implementation 8: The first indication information indicates not to toggle the first initial HARQ feedback configuration or the second initial HARQ feedback configuration; or the first indication information indicates to toggle an initial HARQ feedback configuration in the first initial HARQ feedback configuration and the second initial HARQ feedback configuration from indicating that no feedback is needed to indicating that a feedback is needed; or the first indication information indicates to toggle an initial HARQ feedback configuration in the first initial HARQ feedback configuration and the second initial HARQ feedback configuration from indicating that a feedback is needed to indicating that no feedback is needed.

In this implementation, the second communication apparatus and the first communication apparatus may pre-agree upon that, if the toggling result of the first initial HARQ feedback configuration and/or the toggling result of the second initial HARQ feedback configuration that are/is determined based on the first indication information indicate/indicates that at least one of the first HARQ process and the second HARQ process is a HARQ process that needs a HARQ feedback, the second communication apparatus may determine that both the first HARQ process and the second HARQ process need HARQ feedbacks.

Alternatively, the second communication apparatus and the first communication apparatus may pre-agree upon that, if the toggling result of the first initial HARQ feedback configuration and/or the toggling result of the second initial HARQ feedback configuration that are/is determined based on the first indication information indicate/indicates that at least one of the first HARQ process and the second HARQ process is a HARQ process that needs no HARQ feedback, the second communication apparatus may determine that neither the first HARQ process nor the second HARQ process needs a HARQ feedback.

Optionally, content pre-agreed upon by the second communication apparatus and the first communication apparatus may be related to a meaning of the first indication information. The second communication apparatus may determine, based on different meanings of the first indication information, different agreements to be fulfilled.

For ease of understanding, the following describes the implementation 8 with reference to an example.

For example, it is assumed that the first indication information is a 1-bit field, a value of the bit being 0 indicates not to toggle the first initial HARQ feedback configuration or the second initial HARQ feedback configuration, and the value of the bit being 1 indicates to toggle an initial HARQ feedback configuration from indicating that a feedback is needed to indicating that no feedback is needed, or indicates to toggle an initial HARQ feedback configuration from indicating that no feedback is needed to indicating that a feedback is needed.

Whether the value of the bit being 1 indicates to toggle an initial HARQ feedback configuration from indicating that a feedback is needed to indicating that no feedback is needed, or indicates to toggle an initial HARQ feedback configuration from indicating that no feedback is needed to indicating that a feedback is needed may be pre-agreed upon by the first communication apparatus and the second communication apparatus, or may be configured or indicated by the first communication apparatus to the second communication apparatus.

Further, assuming that the value of the bit being 1 indicates to toggle an initial HARQ feedback configuration from indicating that a feedback is needed to indicating that no feedback is needed, corresponding content pre-agreed upon by the second communication apparatus and the first communication apparatus is as follows: If the toggling result of the first initial HARQ feedback configuration and/or the toggling result of the second initial HARQ feedback configuration that are/is determined based on the first indication information indicate/indicates that at least one of the first HARQ process and the second HARQ process is a HARQ process that needs a HARQ feedback, the second communication apparatus may determine that both the first HARQ process and the second HARQ process need HARQ feedbacks.

Assuming that the value of the bit being 1 indicates to toggle an initial HARQ feedback configuration from indicating that no feedback is needed to indicating that a feedback is needed, corresponding content pre-agreed upon by the second communication apparatus and the first communication apparatus is as follows: If the toggling result of the first initial HARQ feedback configuration and/or the toggling result of the second initial HARQ feedback configuration that are/is determined based on the first indication information indicate/indicates that at least one of the first HARQ process and the second HARQ process is a HARQ process that needs no HARQ feedback, the second communication apparatus may determine that neither the first HARQ process nor the second HARQ process needs a HARQ feedback.

In the following four different cases, a result of determining, by the second communication apparatus based on the first indication information, whether the first HARQ process and the second HARQ process need HARQ feedbacks is described.
(1) Both the first initial HARQ feedback configuration and the second initial HARQ feedback configuration indicate that no feedback is needed.

When a bit value of the first indication information being 1 indicates to toggle an initial HARQ feedback configuration from indicating that a feedback is needed to indicating that no feedback is needed, if the bit value of the first indication information received by the second communication apparatus is 0, the second communication apparatus determines, based on the first indication information, to toggle neither the first initial HARQ feedback configuration nor the second initial HARQ feedback configuration. The second communication apparatus determines, based on a toggling result, that neither the first HARQ process nor the second HARQ process needs a feedback.

If the bit value of the first indication information received by the second communication apparatus is 1, because both the first initial HARQ feedback configuration and the second initial HARQ feedback configuration indicate that no feedback is needed, the second communication apparatus determines, based on the first indication information, not to toggle the first initial HARQ feedback configuration or the second initial HARQ feedback configuration. The second communication apparatus determines, based on a toggling result, that neither the first HARQ process nor the second HARQ process needs a feedback.

When a bit value of the first indication information being 1 indicates to toggle an initial HARQ feedback configuration from indicating that no feedback is needed to indicating that a feedback is needed, if the bit value of the first indication information received by the second communication apparatus is 0, the second communication apparatus determines, based on the first indication information, to toggle neither the first initial HARQ feedback configuration nor the second initial HARQ feedback configuration. The second communication apparatus determines, based on a toggling result, that neither the first HARQ process nor the second HARQ process needs a feedback.

If the bit value of the first indication information received by the second communication apparatus is 1, because both the first initial HARQ feedback configuration and the second initial HARQ feedback configuration indicate that no feedback is needed, the second communication apparatus determines, based on the first indication information, to toggle both the first initial HARQ feedback configuration and the second initial HARQ feedback configuration to indicating that a feedback is needed. The second communication apparatus determines, based on a toggling result, that both the first HARQ process and the second HARQ process need feedbacks.

(2) Both the first initial HARQ feedback configuration and the second initial HARQ feedback configuration indicate that a feedback is needed.

When a bit value of the first indication information being 1 indicates to toggle an initial HARQ feedback configuration from indicating that a feedback is needed to indicating that no feedback is needed, if the bit value of the first indication information received by the second communication apparatus is 0, the second communication apparatus determines, based on the first indication information, to toggle neither the first initial HARQ feedback configuration nor the second initial HARQ feedback configuration. The second communication apparatus determines, based on a toggling result, that both the first HARQ process and the second HARQ process need feedbacks.

If the bit value of the first indication information received by the second communication apparatus is 1, because both the first initial HARQ feedback configuration and the second initial HARQ feedback configuration indicate that a feedback is needed, the second communication apparatus toggles, based on the first indication information, both the first initial HARQ feedback configuration and the second initial HARQ feedback configuration to indicating that no feedback is needed. The second communication apparatus determines, based on a toggling result, that neither the first HARQ process nor the second HARQ process needs a feedback.

When a bit value of the first indication information being 1 indicates to toggle an initial HARQ feedback configuration from indicating that no feedback is needed to indicating that a feedback is needed, if the bit value of the first indication information received by the second communication apparatus is 0, the second communication apparatus determines, based on the first indication information, to toggle neither the first initial HARQ feedback configuration nor the second initial HARQ feedback configuration. The second communication apparatus determines, based on a toggling result, that both the first HARQ process and the second HARQ process need feedbacks.

If the bit value of the first indication information received by the second communication apparatus is 1, because both the first initial HARQ feedback configuration and the second initial HARQ feedback configuration indicate that a feedback is needed, the second communication apparatus determines, based on the first indication information, not to toggle the first initial HARQ feedback configuration or the second initial HARQ feedback configuration. The second communication apparatus determines, based on a toggling result, that both the first HARQ process and the second HARQ process need feedbacks.

(3) The first initial HARQ feedback configuration indicates that a feedback is needed, and the second initial HARQ feedback configuration indicates that no feedback is needed.

When a bit value of the first indication information being 1 indicates to toggle an initial HARQ feedback configuration from indicating that a feedback is needed to indicating that no feedback is needed, if the bit value of the first indication information received by the second communication apparatus is 0, the second communication apparatus determines, based on the first indication information, to toggle neither the first initial HARQ feedback configuration nor the second initial HARQ feedback configuration. A toggling result indicates that the first HARQ process needs a feedback and the second HARQ process needs no feedback. In this case, the second communication apparatus determines, based on a pre-agreement, that both the first HARQ process and the second HARQ process need feedbacks.

If the bit value of the first indication information received by the second communication apparatus is 1, the second communication apparatus determines, based on the first indication information, to toggle the first initial HARQ feedback configuration to indicating that no feedback is needed, and not to toggle the second initial HARQ feedback configuration. The second communication apparatus determines, based on a toggling result, that neither the first HARQ process nor the second HARQ process needs a feedback.

When a bit value of the first indication information being 1 indicates to toggle an initial HARQ feedback configuration from indicating that no feedback is needed to indicating that a feedback is needed, if the bit value of the first indication information received by the second communication apparatus is 0, the second communication apparatus determines, based on the first indication information, to toggle neither the first initial HARQ feedback configuration nor the second initial HARQ feedback configuration. A toggling result indicates that the first HARQ process needs a feedback and the second HARQ process needs no feedback. In this case, the second communication apparatus determines, based on a pre-agreement, that neither the first HARQ process nor the second HARQ process needs a feedback.

If the bit value of the first indication information received by the second communication apparatus is 1, the second communication apparatus determines, based on the first indication information, to toggle the second initial HARQ feedback configuration to indicating that a feedback is needed, and not to toggle the first initial HARQ feedback configuration. The second communication apparatus determines, based on a toggling result, that both the first HARQ process and the second HARQ process need feedbacks.

(4) The first initial HARQ feedback configuration indicates that no feedback is needed, and the second initial HARQ feedback configuration indicates that a feedback is needed.

When a bit value of the first indication information being 1 indicates to toggle an initial HARQ feedback configuration from indicating that a feedback is needed to indicating that no feedback is needed, if the bit value of the first indication information received by the second communication apparatus is 0, the second communication apparatus determines, based on the first indication information, to toggle neither the first initial HARQ feedback configuration nor the second initial HARQ feedback configuration. A toggling result indicates that the first HARQ process needs no feedback and the second HARQ process needs a feedback. In this case, the second communication apparatus determines, based on a pre-agreement, that both the first HARQ process and the second HARQ process need feedbacks.

If the bit value of the first indication information received by the second communication apparatus is 1, the second communication apparatus determines, based on the first indication information, to toggle the second initial HARQ feedback configuration to indicating that no feedback is needed, and not to toggle the first initial HARQ feedback configuration. The second communication apparatus determines, based on a toggling result, that neither the first HARQ process nor the second HARQ process needs a feedback.

When a bit value of the first indication information being 1 indicates to toggle an initial HARQ feedback configuration from indicating that no feedback is needed to indicating that a feedback is needed, if the bit value of the first indication information received by the second communication apparatus is 0, the second communication apparatus determines, based on the first indication information, to toggle neither the first initial HARQ feedback configuration nor the second initial HARQ feedback configuration. A toggling result indicates that the first HARQ process needs no feedback and the second HARQ process needs a feedback. In this case, the second communication apparatus determines, based on a pre-agreement, that neither the first HARQ process nor the second HARQ process needs a feedback.

If the bit value of the first indication information received by the second communication apparatus is 1, the second communication apparatus determines, based on the first indication information, to toggle the first initial HARQ feedback configuration to indicating that a feedback is needed, and not to toggle the second initial HARQ feedback configuration. The second communication apparatus determines, based on a toggling result, that both the first HARQ process and the second HARQ process need feedbacks.

This embodiment of this application provides a plurality of implementations of indicating, by the first indication information, whether to toggle the first initial HARQ feedback configuration and/or the second initial HARQ feedback configuration. Different implementations may be selected based on different application scenarios to flexibly perform indication. In addition, no excessive signaling needs to be additionally configured, so that complexity of detection by the second communication apparatus may not be increased.

The foregoing provides descriptions about determining, by the second communication apparatus based on the first indication information, that both the first HARQ process and the second HARQ process need feedbacks or neither the first HARQ process nor the second HARQ process needs a feedback. Optionally, if the second communication apparatus determines, based on the first indication information, that both the first HARQ process and the second HARQ process need feedbacks, after receiving and decoding the first transport block and the second transport block, the second communication apparatus may send a HARQ feedback for the first transport block and a HARQ feedback for the second transport block to the first communication apparatus, to respectively indicate a decoding result of the first transport block and a decoding result of the second transport block. If the second communication apparatus determines, based on the first indication information, that neither the first HARQ process nor the second HARQ process needs a feedback, after receiving and decoding the first transport block and the second transport block, the second communication apparatus does not need to send a HARQ feedback for the first transport block or a HARQ feedback for the second transport block to the first communication apparatus.

Optionally, before S503, the second communication apparatus may determine whether the first indication information takes effect. When determining that the first indication information takes effect, the second communication apparatus performs S503 to determine, based on the first indication information, whether the first HARQ process and the second HARQ process need HARQ feedbacks. If determining that the first indication information does not take effect, the second communication apparatus does not perform S503, but determines, based on the first initial HARQ feedback configuration and the second initial HARQ feedback configuration, whether the first HARQ process and the second HARQ process need HARQ feedbacks. Whether the first indication information takes effect may be preconfigured. For example, the first communication apparatus configures, by using RRC signaling, whether the first control information can be used for configuring a HARQ feedback configuration. If the first control information is configured to be used for configuring a HARQ feedback configuration, the first indication information may take effect. If the first control information is not configured to be used for configuring a HARQ feedback configuration, the first indication information does not take effect.

In the foregoing embodiments, the communication method provided in embodiments of this application is described by using an example in which two transport blocks (the first transport block and the second transport block) are scheduled based on one piece of DCI. It can be understood that the communication method provided in embodiments of this application may alternatively be applied to a scenario in which more than two transport blocks are scheduled based on one piece of DCI. In this scenario, the first transport block and the second transport block may be any two of the plurality of transport blocks that are scheduled.

Further, the first transport block or the second transport block may be extended to a plurality of transport blocks scheduled based on same DCI. To be specific, the first transport block and the second transport block are scheduled based on same DCI, where the first transport block may include a plurality of transport blocks, and/or the second transport block may include a plurality of transport blocks. In this scenario, the communication method provided in embodiments of this application may be understood as follows: The first communication apparatus may send, to the second communication apparatus, first indication information corresponding to a plurality of transport blocks that are scheduled, where the first indication information indicates whether to toggle an initial HARQ feedback configuration of a HARQ process corresponding to each of the plurality of transport blocks. The second communication apparatus may determine, based on the first indication information, that all of HARQ processes corresponding to all the transport blocks need feedbacks or none of the HARQ processes needs a feedback. In this way, HARQ feedback configurations of HARQ processes corresponding to all of the plurality of transport blocks are consistent. For a specific implementation of the method, refer to the descriptions in S501 to S503.

For a specific implementation of determining, by the second communication apparatus based on the first indication information, whether a HARQ process corresponding to each transport block needs a feedback, refer to the plurality of implementations described in S503. For example, the first indication information may indicate to toggle all initial HARQ feedback configurations in initial HARQ feedback configurations of HARQ processes corresponding to the plurality of transport blocks from indicating that no feedback is needed to indicating that a feedback is needed, or indicate to toggle all initial HARQ feedback configurations from indicating that a feedback is needed to indicating that no feedback is needed. For another example, when the initial HARQ feedback configurations of the HARQ processes corresponding to the plurality of transport blocks are the same, the first indication information may indicate to toggle none of the initial HARQ feedback configurations, or indicate to toggle all of the initial HARQ feedback configurations.

Optionally, the first communication apparatus and the second communication apparatus may pre-agree upon that, if a toggling result determined based on the first indication information indicates that at least one of the HARQ processes corresponding to the plurality of transport blocks is a HARQ process that needs a HARQ feedback, the second communication apparatus may determine that all of the HARQ processes corresponding to the plurality of transport blocks need HARQ feedbacks.

Alternatively, the second communication apparatus and the first communication apparatus may pre-agree upon that, if a toggling result determined based on the first indication information indicates that at least one of the HARQ processes corresponding to the plurality of transport blocks is a HARQ process that needs no HARQ feedback, the second communication apparatus may determine that none of the HARQ processes corresponding to the plurality of transport blocks needs a HARQ feedback.

It can be understood that, in the foregoing embodiments, the methods and/or the steps implemented by the first communication apparatus may alternatively be implemented by a component (for example, a chip or a circuit) that may be used in the first communication apparatus, or by an apparatus including the first communication apparatus; and the methods and/or the steps implemented by the second communication apparatus may alternatively be implemented by a component (for example, a chip or a circuit) that may be used in the second communication apparatus, or by an apparatus including the second communication apparatus.

Correspondingly, embodiments of this application further provide a communication apparatus for implementing the foregoing embodiments. It can be understood that, to implement the foregoing functions, the communication apparatus includes a corresponding hardware structure and/or software module for performing the functions. A person skilled in the art should easily be aware that, in combination with units and algorithm steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the method embodiments. For example, the functional modules may be divided based on functions, or two or more functions may be integrated into one processing module. The integrated module may be implemented in a form of hardware, or may be implemented in a form of a software functional module. It should be noted that division into the modules in embodiments of this application is an example, and is merely logical function division. During actual implementation, another division manner may be used.

When each functional module is obtained through division based on each corresponding function, FIG. 6 is a diagram of a possible structure of a communication apparatus in the foregoing embodiments. As shown in FIG. 6, the apparatus 600 includes a transceiver module 601 and a processing module 602.

For example, the communication apparatus 600 is the second communication apparatus in the foregoing embodiments. In a possible implementation, the transceiver module 601 is configured to perform S501 to S503 in FIG. 5, and/or is configured to perform an information/data receiving-related method and an information/data sending-related method performed by the second communication apparatus in another process in the technical solutions described in this specification. The processing module 602 is configured to perform S501 to S503 in FIG. 5, and/or is configured to perform an information/data processing-related method performed by the second communication apparatus in another process in the technical solutions described in this specification.

For example, the communication apparatus 600 is the first communication apparatus in the foregoing embodiments. In a possible implementation, the transceiver module 601 is configured to perform S501 to S503 in FIG. 5, and/or is configured to perform an information/data receiving-related method and an information/data sending-related method performed by the first communication apparatus in another process in the technical solutions described in this specification. The processing module 602 is configured to perform S501 to S503 in FIG. 5, and/or is configured to perform an information/data processing-related method performed by the first communication apparatus in another process in the technical solutions described in this specification.

It should be noted that all related content of the steps in the foregoing method embodiments may be cited in function descriptions of corresponding functional modules. Details are not described herein again.

In this embodiment, the communication apparatus 600 is presented by dividing the functional modules through integration. The module herein may be a specific ASIC, a circuit, a processor that executes one or more software or firmware programs, a memory, an integrated logic circuit, and/or another component capable of providing the foregoing functions.

The communication apparatus 600 provided in this embodiment may perform the foregoing communication method. Therefore, for technical effects that can be achieved by the communication apparatus, refer to the foregoing method embodiments. Details are not described herein again.

It should be noted that one or more of the foregoing modules or units may be implemented by using software, hardware, or a combination thereof. When any one of the foregoing modules or units is implemented by using software, the software exists in a form of computer program instructions, and is stored in a memory, and a processor may be configured to execute the program instructions and implement the foregoing method processes. The processor may be built into a SoC (system-on-a chip) or an ASIC, or may be an independent semiconductor chip. In addition to a core that is configured to execute software instructions to perform an operation or processing, the processor may further include a necessary hardware accelerator, for example, a field programmable gate array (field programmable gate array, FPGA), a programmable logic device (programmable logic device, PLD), or a logic circuit that implements a special logic operation.

When the foregoing modules or units are implemented by using hardware, the hardware may be any one or any combination of a CPU, a microprocessor, a DSP chip, a microcontroller unit (microcontroller unit, MCU), an artificial intelligence processor, an ASIC, a SoC, an FPGA, a PLD, a dedicated digital circuit, a hardware accelerator, or a non-integrated discrete component, and the hardware may perform the foregoing method processes by running necessary software or without relying on software.

Optionally, embodiments of this application further provide a chip system, including at least one processor and an interface. The at least one processor is coupled to a memory through the interface. When the at least one processor executes a computer program or computer instructions in the memory, the method in any one of the foregoing method embodiments is performed. In a possible implementation, the communication apparatus further includes the memory. Optionally, the chip system may include a chip, or may include a chip and another discrete component. This is not specifically limited in embodiments of this application.

All or some of the foregoing embodiments may be implemented by software, hardware, firmware, or any combination thereof. When the embodiments are implemented by a software program, all or some of the embodiments may be implemented in a form of a computer program product.

This application provides a computer program product, including one or more computer instructions. When the computer instructions are run on a communication apparatus, any method in embodiments of this application is performed.

When the computer instructions are loaded and executed on a computer, all or some of processes or functions according to embodiments of this application are generated. The computer may be a general-purpose computer, a dedicated computer, a computer network, or another programmable apparatus.

The computer instructions may be stored in a computer-readable storage medium. An embodiment of this application provides a computer-readable storage medium. The computer-readable storage medium stores instructions. When the instructions are run on a communication apparatus, any method in embodiments of this application is performed.

The computer instructions may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, for example, a server or a data center, integrating one or more usable media. The usable medium may be a magnetic medium (for example, a floppy disk, a hard disk drive, or a magnetic tape), an optical medium (for example, a digital versatile disc (digital versatile disc, DVD)), a semiconductor medium (for example, a solid-state drive (solid-state drive, SSD)), or the like.

Although this application is described with reference to embodiments, during implementation of this application that claims protection, a person skilled in the art may understand and implement another variation of the disclosed embodiments by viewing the accompanying drawings, disclosed content, and appended claims. In the claims, the term "comprising" (comprising) does not exclude another component or step, and the term "a" or "an" does not exclude a case of a plurality of items. A single processor or another unit may implement several functions enumerated in the claims. Some measures are recorded in dependent claims that are different from each other, but this does not mean that these measures cannot be combined to produce better effects.

Although this application is described with reference to specific features and embodiments thereof, it is clear that various modifications and combinations may be made to the features and the embodiments without departing from the scope of this application. Correspondingly, this specification and the accompanying drawings are merely example descriptions of this application defined in the appended claims, and are considered as covering any and all modifications, variations, combinations or equivalents within the scope of this application. This application is intended to cover these modifications and variations of this application provided that they fall within the scope of the claims of this application and their equivalent technologies.

## Claims

1. A communication method, wherein the method comprises:
obtaining a first initial hybrid automatic repeat request HARQ feedback configuration corresponding to a first HARQ process and a second initial HARQ feedback configuration corresponding to a second HARQ process, wherein the first initial HARQ feedback configuration comprises that a HARQ feedback is needed or no HARQ feedback is needed, and the second initial HARQ feedback configuration comprises that a HARQ feedback is needed or no HARQ feedback is needed;
receiving first control information, wherein the first control information comprises first indication information corresponding to a first transport block and a second transport block, the first transport block corresponds to the first HARQ process, the second transport block corresponds to the second HARQ process, and the first indication information indicates whether to toggle the first initial HARQ feedback configuration and/or the second initial HARQ feedback configuration; and
determining, based on the first indication information, that both the first HARQ process and the second HARQ process need HARQ feedbacks, or determining that neither the first HARQ process nor the second HARQ process needs a HARQ feedback.

2. The method according to claim 1, wherein determining, based on the first indication information, that both the first HARQ process and the second HARQ process need HARQ feedbacks, or determining that neither the first HARQ process nor the second HARQ process needs a HARQ feedback comprises:
determining a toggling result of the first initial HARQ feedback configuration and/or a toggling result of the second initial HARQ feedback configuration based on the first indication information;
determining, based on the toggling result of the first initial HARQ feedback configuration and/or the toggling result of the second initial HARQ feedback configuration, whether HARQ feedback needs to be performed for the first HARQ process and the second HARQ process; and
when at least one of the first HARQ process and the second HARQ process is a HARQ process that needs a HARQ feedback, determining that both the first HARQ process and the second HARQ process need HARQ feedbacks; or
when at least one of the first HARQ process and the second HARQ process is a HARQ process that needs no HARQ feedback, determining that neither the first HARQ process nor the second HARQ process needs a HARQ feedback.

3. The method according to claim 1 or 2, wherein obtaining the first initial HARQ feedback configuration corresponding to the first HARQ process and the second initial HARQ feedback configuration corresponding to the second HARQ process comprises:
receiving radio resource control RRC configuration information, wherein the RRC configuration information comprises the first initial HARQ feedback configuration and the second initial HARQ feedback configuration.

4. A communication method, wherein the method comprises:
sending a first initial hybrid automatic repeat request HARQ feedback configuration corresponding to a first HARQ process and a second initial HARQ feedback configuration corresponding to a second HARQ process; and
sending first control information, wherein the first control information comprises first indication information corresponding to a first transport block and a second transport block, the first transport block corresponds to the first HARQ process, the second transport block corresponds to the second HARQ process, and the first indication information indicates whether to toggle the first initial HARQ feedback configuration and/or the second initial HARQ feedback configuration.

5. The method according to claim 4, wherein sending the first initial HARQ feedback configuration corresponding to the first HARQ process and the second initial HARQ feedback configuration corresponding to the second HARQ process comprises:
sending radio resource control RRC configuration information, wherein the RRC configuration information comprises the first initial HARQ feedback configuration and the second initial HARQ feedback configuration.

6. The method according to any one of claims 1 to 5, wherein that the first indication information indicates whether to toggle the first initial HARQ feedback configuration and/or the second initial HARQ feedback configuration comprises:
when the first initial HARQ feedback configuration is the same as the second initial HARQ feedback configuration, the first indication information indicates to toggle the first initial HARQ feedback configuration and the second initial HARQ feedback configuration, or the first indication information indicates not to toggle the first initial HARQ feedback configuration or the second initial HARQ feedback configuration.

7. The method according to any one of claims 1 to 6, wherein that the first indication information indicates whether to toggle the first initial HARQ feedback configuration and/or the second initial HARQ feedback configuration comprises:
when the first initial HARQ feedback configuration is different from the second initial HARQ feedback configuration, the first indication information indicates to toggle the first initial HARQ feedback configuration, or the first indication information indicates to toggle the second initial HARQ feedback configuration.

8. The method according to any one of claims 1 to 6, wherein that the first indication information indicates whether to toggle the first initial HARQ feedback configuration and/or the second initial HARQ feedback configuration comprises:
when the first initial HARQ feedback configuration is different from the second initial HARQ feedback configuration, the first indication information indicates to toggle an initial HARQ feedback configuration in the first initial HARQ feedback configuration and the second initial HARQ feedback configuration from indicating that no feedback is needed to indicating that a feedback is needed; or the first indication information indicates to toggle an initial HARQ feedback configuration in the first initial HARQ feedback configuration and the second initial HARQ feedback configuration from indicating that a feedback is needed to indicating that no feedback is needed.

9. The method according to any one of claims 1 to 6, wherein that the first indication information indicates whether to toggle the first initial HARQ feedback configuration and/or the second initial HARQ feedback configuration comprises:
when the first initial HARQ feedback configuration is different from the second initial HARQ feedback configuration, the first indication information indicates not to toggle the first initial HARQ feedback configuration or the second initial HARQ feedback configuration; or the first indication information indicates to toggle an initial HARQ feedback configuration in the first initial HARQ feedback configuration and the second initial HARQ feedback configuration from indicating that no feedback is needed to indicating that a feedback is needed; or the first indication information indicates to toggle an initial HARQ feedback configuration in the first initial HARQ feedback configuration and the second initial HARQ feedback configuration from indicating that a feedback is needed to indicating that no feedback is needed.

10. The method according to any one of claims 1 to 5, wherein that the first indication information indicates whether to toggle the first initial HARQ feedback configuration and/or the second initial HARQ feedback configuration comprises:
the first indication information indicates to toggle an initial HARQ feedback configuration in the first initial HARQ feedback configuration and the second initial HARQ feedback configuration from indicating that no feedback is needed to indicating that a feedback is needed; or the first indication information indicates to toggle an initial HARQ feedback configuration in the first initial HARQ feedback configuration and the second initial HARQ feedback configuration from indicating that a feedback is needed to indicating that no feedback is needed.

11. The method according to any one of claims 1 to 5, wherein that the first indication information indicates whether to toggle the first initial HARQ feedback configuration and/or the second initial HARQ feedback configuration comprises:
the first indication information indicates to toggle a target initial HARQ feedback configuration, or the first indication information indicates not to toggle a target initial HARQ feedback configuration, wherein
when a subframe number of a subframe used to receive the first control information is an odd number, the target initial HARQ feedback configuration is the first initial HARQ feedback configuration; or when a subframe number of a subframe used to receive the first control information is an even number, the target initial HARQ feedback configuration is the second initial HARQ feedback configuration.

12. The method according to any one of claims 1 to 5, wherein that the first indication information indicates whether to toggle the first initial HARQ feedback configuration and/or the second initial HARQ feedback configuration comprises:
the first indication information indicates not to toggle the first initial HARQ feedback configuration or the second initial HARQ feedback configuration; or the first indication information indicates to toggle an initial HARQ feedback configuration in the first initial HARQ feedback configuration and the second initial HARQ feedback configuration from indicating that no feedback is needed to indicating that a feedback is needed; or the first indication information indicates to toggle an initial HARQ feedback configuration in the first initial HARQ feedback configuration and the second initial HARQ feedback configuration from indicating that a feedback is needed to indicating that no feedback is needed.

13. The method according to any one of claims 1 to 12, wherein the first indication information occupies 1 bit in the first control information.

14. A communication apparatus, wherein the communication apparatus comprises a transceiver module and a processing module, wherein
the processing module is configured to obtain a first initial hybrid automatic repeat request HARQ feedback configuration corresponding to a first HARQ process and a second initial HARQ feedback configuration corresponding to a second HARQ process, wherein the first initial HARQ feedback configuration comprises that a HARQ feedback is needed or no HARQ feedback is needed, and the second initial HARQ feedback configuration comprises that a HARQ feedback is needed or no HARQ feedback is needed;
the transceiver module is configured to receive first control information, wherein the first control information comprises first indication information corresponding to a first transport block and a second transport block, the first transport block corresponds to the first HARQ process, the second transport block corresponds to the second HARQ process, and the first indication information indicates whether to toggle the first initial HARQ feedback configuration and/or the second initial HARQ feedback configuration; and
the processing module is further configured to determine, based on the first indication information, that both the first HARQ process and the second HARQ process need HARQ feedbacks, or determine that neither the first HARQ process nor the second HARQ process needs a HARQ feedback.

15. The apparatus according to claim 14, wherein that the processing module is further configured to determine, based on the first indication information, that both the first HARQ process and the second HARQ process need HARQ feedbacks, or determine that neither the first HARQ process nor the second HARQ process needs a HARQ feedback comprises:
the processing module is further configured to: determine a toggling result of the first initial HARQ feedback configuration and/or a toggling result of the second initial HARQ feedback configuration based on the first indication information;
determine, based on the toggling result of the first initial HARQ feedback configuration and/or the toggling result of the second initial HARQ feedback configuration, whether HARQ feedback needs to be performed for the first HARQ process and the second HARQ process; and
when at least one of the first HARQ process and the second HARQ process is a HARQ process that needs a HARQ feedback, determine that both the first HARQ process and the second HARQ process need HARQ feedbacks; or
when at least one of the first HARQ process and the second HARQ process is a HARQ process that needs no HARQ feedback, determine that neither the first HARQ process nor the second HARQ process needs a HARQ feedback.

16. The apparatus according to claim 14 or 15, wherein that the processing module is configured to obtain the first initial HARQ feedback configuration corresponding to the first HARQ process and the second initial HARQ feedback configuration corresponding to the second HARQ process comprises:
the processing module receives radio resource control RRC configuration information through the transceiver module, wherein the RRC configuration information comprises the first initial HARQ feedback configuration and the second initial HARQ feedback configuration.

17. A communication apparatus, wherein the apparatus comprises a transceiver module and a processing module, wherein
the processing module is configured to generate a first initial hybrid automatic repeat request HARQ feedback configuration corresponding to a first HARQ process and a second initial HARQ feedback configuration corresponding to a second HARQ process;
the transceiver module is configured to send the first initial HARQ feedback configuration and the second initial HARQ feedback configuration;
the processing module is further configured to generate first control information, wherein the first control information comprises first indication information corresponding to a first transport block and a second transport block, the first transport block corresponds to the first HARQ process, the second transport block corresponds to the second HARQ process, and the first indication information indicates whether to toggle the first initial HARQ feedback configuration and/or the second initial HARQ feedback configuration; and
the transceiver module is further configured to send the first control information.

18. The apparatus according to claim 17, wherein that the transceiver module is configured to send the first initial HARQ feedback configuration corresponding to the first HARQ process and the second initial HARQ feedback configuration corresponding to the second HARQ process comprises:
the transceiver module is configured to send radio resource control RRC configuration information, wherein the RRC configuration information comprises the first initial HARQ feedback configuration and the second initial HARQ feedback configuration.

19. The apparatus according to any one of claims 14 to 18, wherein that the first indication information indicates whether to toggle the first initial HARQ feedback configuration and/or the second initial HARQ feedback configuration comprises:
when the first initial HARQ feedback configuration is the same as the second initial HARQ feedback configuration, the first indication information indicates to toggle the first initial HARQ feedback configuration and the second initial HARQ feedback configuration, or the first indication information indicates not to toggle the first initial HARQ feedback configuration or the second initial HARQ feedback configuration.

20. The apparatus according to any one of claims 14 to 19, wherein that the first indication information indicates whether to toggle the first initial HARQ feedback configuration and/or the second initial HARQ feedback configuration comprises:
when the first initial HARQ feedback configuration is different from the second initial HARQ feedback configuration, the first indication information indicates to toggle the first initial HARQ feedback configuration, or the first indication information indicates to toggle the second initial HARQ feedback configuration.

21. The apparatus according to any one of claims 14 to 19, wherein that the first indication information indicates whether to toggle the first initial HARQ feedback configuration and/or the second initial HARQ feedback configuration comprises:
when the first initial HARQ feedback configuration is different from the second initial HARQ feedback configuration, the first indication information indicates to toggle an initial HARQ feedback configuration in the first initial HARQ feedback configuration and the second initial HARQ feedback configuration from indicating that no feedback is needed to indicating that a feedback is needed; or the first indication information indicates to toggle an initial HARQ feedback configuration in the first initial HARQ feedback configuration and the second initial HARQ feedback configuration from indicating that a feedback is needed to indicating that no feedback is needed.

22. The apparatus according to any one of claims 14 to 19, wherein that the first indication information indicates whether to toggle the first initial HARQ feedback configuration and/or the second initial HARQ feedback configuration comprises:
when the first initial HARQ feedback configuration is different from the second initial HARQ feedback configuration, the first indication information indicates not to toggle the first initial HARQ feedback configuration or the second initial HARQ feedback configuration; or the first indication information indicates to toggle an initial HARQ feedback configuration in the first initial HARQ feedback configuration and the second initial HARQ feedback configuration from indicating that no feedback is needed to indicating that a feedback is needed; or the first indication information indicates to toggle an initial HARQ feedback configuration in the first initial HARQ feedback configuration and the second initial HARQ feedback configuration from indicating that a feedback is needed to indicating that no feedback is needed.

23. The apparatus according to any one of claims 14 to 18, wherein that the first indication information indicates whether to toggle the first initial HARQ feedback configuration and/or the second initial HARQ feedback configuration comprises:
the first indication information indicates to toggle an initial HARQ feedback configuration in the first initial HARQ feedback configuration and the second initial HARQ feedback configuration from indicating that no feedback is needed to indicating that a feedback is needed; or the first indication information indicates to toggle an initial HARQ feedback configuration in the first initial HARQ feedback configuration and the second initial HARQ feedback configuration from indicating that a feedback is needed to indicating that no feedback is needed.

24. The apparatus according to any one of claims 14 to 18, wherein that the first indication information indicates whether to toggle the first initial HARQ feedback configuration and/or the second initial HARQ feedback configuration comprises:
the first indication information indicates to toggle a target initial HARQ feedback configuration, or the first indication information indicates not to toggle a target initial HARQ feedback configuration, wherein
when a subframe number of a subframe used to receive the first control information is an odd number, the target initial HARQ feedback configuration is the first initial HARQ feedback configuration; or when a subframe number of a subframe used to receive the first control information is an even number, the target initial HARQ feedback configuration is the second initial HARQ feedback configuration.

25. The apparatus according to any one of claims 14 to 18, wherein that the first indication information indicates whether to toggle the first initial HARQ feedback configuration and/or the second initial HARQ feedback configuration comprises:
the first indication information indicates not to toggle the first initial HARQ feedback configuration or the second initial HARQ feedback configuration; or the first indication information indicates to toggle an initial HARQ feedback configuration in the first initial HARQ feedback configuration and the second initial HARQ feedback configuration from indicating that no feedback is needed to indicating that a feedback is needed; or the first indication information indicates to toggle an initial HARQ feedback configuration in the first initial HARQ feedback configuration and the second initial HARQ feedback configuration from indicating that a feedback is needed to indicating that no feedback is needed.

26. The apparatus according to any one of claims 14 to 25, wherein the first indication information occupies 1 bit in the first control information.

27. A communication apparatus, wherein the communication apparatus comprises a processor, the processor is configured to execute instructions stored in a memory, and when the instructions are run by the processor, the communication apparatus is enabled to perform the method according to any one of claims 1 to 13.

28. The apparatus according to claim 27, wherein the communication apparatus further comprises the memory.

29. A computer-readable storage medium, wherein the computer-readable storage medium stores instructions, and when the instructions are executed by a computer, the method according to any one of claims 1 to 13 is performed.

30. A computer program product, wherein the computer program product comprises instructions, and when the instructions are executed by a computer, the method according to any one of claims 1 to 13 is performed.

31. A chip, wherein the chip comprises a processor, and the processor is configured to run instructions, to enable an apparatus comprising the chip to perform the method according to any one of claims 1 to 13.

32. The chip according to claim 31, wherein the chip further comprises a memory, and the memory is configured to store the instructions.

33. A communication system, wherein the communication system comprises a terminal device and a network device, the terminal device is configured to perform the method according to any one of claims 1 to 3 or the method according to any one of claims 6 to 13, and the network device is configured to perform the method according to any one of claims 4 to 13.
